(19) Europäisches Patentamt
European Patent Office
Office européen des brevets

(11) **EP 4 733 944 A1**

(12) **EUROPEAN PATENT APPLICATION**
published in accordance with Art. 153(4) EPC

(43) Date of publication:
**29.04.2026 Bulletin 2026/18**

(21) Application number: **24842259.4**

(22) Date of filing: **10.07.2024**

(51) International Patent Classification (IPC):
**G06F 11/34** (2006.01)   **G06F 11/30** (2006.01)
**G06N 20/00** (2019.01)   **G06N 3/02** (2006.01)

(52) Cooperative Patent Classification (CPC):
**G06F 11/30; G06F 11/34; G06N 3/02; G06N 20/00**

(86) International application number:
**PCT/CN2024/104777**

(87) International publication number:
**WO 2025/016265 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023   CN 202310870686**

(71) Applicant: **Huawei Technologies Co., Ltd.
Shenzhen, Guangdong 518129 (CN)**

(72) Inventors:
• **CHAI, Xiaomeng**
  **Shenzhen, Guangdong 518129 (CN)**
• **LIU, Lifu**
  **Shenzhen, Guangdong 518129 (CN)**
• **LI, Yuan**
  **Shenzhen, Guangdong 518129 (CN)**
• **SUN, Yan**
  **Shenzhen, Guangdong 518129 (CN)**

(74) Representative: **Thun, Clemens
Mitscherlich PartmbB
Karlstraße 7
80333 München (DE)**

(54) **MODEL MONITORING METHOD, APPARATUS AND SYSTEM, AND STORAGE MEDIUM AND PROGRAM PRODUCT**

(57)   This application discloses a model monitoring method, apparatus, and system, a storage medium, and a program product. The method includes: A terminal device obtains first information, where the first information includes one or more first indices of one or more pieces of ground truth information; and obtains the one or more pieces of ground truth information corresponding to the one or more first indices, where the one or more pieces of ground truth information are used for obtaining a monitoring result of performance of an AI model, and an output of the AI model is predicted information. In this solution, the terminal device may obtain, by obtaining the one or more first indices of the one or more pieces of ground truth information, ground truth information corresponding to a specific time unit, so that performance of a prediction model can be flexibly monitored.

FIG. 5

**Description**

This application claims priority to Chinese Patent Application No. 202310870686.9, filed with the China National Intellectual Property Administration on July 14, 2023 and entitled "MODEL MONITORING METHOD, APPARATUS, AND SYSTEM, STORAGE MEDIUM, AND PROGRAM PRODUCT", which is incorporated herein by reference in its entirety.

**TECHNICAL FIELD**

This application relates to the field of communication technologies, and in particular, to a model monitoring method, apparatus, and system, a storage medium, and a program product.

**BACKGROUND**

Model monitoring refers to monitoring performance of an artificial intelligence (artificial intelligence, AI) model, to determine whether the AI model works normally. If the performance of the AI model is poor, a non-AI mode needs to be switched to, the AI model needs to be replaced or updated, or the like. The model monitoring may be monitoring accuracy of an output of the AI model (which may also be referred to as an intermediate key performance indicator (key performance indicator, KPI)). The accuracy of the output of the AI model is monitored by comparing the output of the AI model with a corresponding ground truth (ground truth), to determine whether the performance of the AI model satisfies a requirement.

An AI model can be used for information prediction. For example, an output of the AI model is predicted information at a t+5 moment. In this case, comparison is usually performed by using ground truth information at the t+5 moment and the predicted information at the t+5 moment. If an intermediate KPI satisfies a preset requirement, this indicates that performance of the AI model is good. If the intermediate KPI does not satisfy the preset requirement, this indicates that the performance of the AI model is poor. Considering that the AI model is used in an actual system, the predicted information is used by a base station to schedule downlink transmission. However, the downlink transmission scheduled by the base station is not necessarily exactly at a moment corresponding to the predicted information. For example, information predicted by the AI model is the information at the t+5 moment. To be specific, if a periodicity of a reference signal (reference signal, RS) is 5 ms, the AI model can predict only information at a 5 ms grid. However, the base station may schedule the downlink transmission at any moment, for example, schedule the downlink transmission at a t+3 moment. In this case, monitoring performance of the predicted information only at the corresponding moment of the predicted information cannot reflect actual performance during the downlink transmission performed by using the predicted information.

Currently, there is no corresponding solution for how to flexibly monitor performance of a prediction model, so that prediction performance can reflect actual system performance.

**SUMMARY**

This application provides a model monitoring method, apparatus, and system, a storage medium, and a program product, to support flexible monitoring of performance of a prediction model, so that prediction performance can reflect actual system performance.

According to a first aspect, a model monitoring method is provided. The method includes: obtaining first information, where the first information includes one or more first indices corresponding to one or more pieces of ground truth information; and obtaining the one or more pieces of ground truth information corresponding to the one or more first indices, where the one or more pieces of ground truth information are used for obtaining a monitoring result of performance of an artificial intelligence AI model, and an output of the AI model is predicted information.

In this aspect, a terminal device may obtain, by obtaining the one or more first indices of the one or more pieces of ground truth information, ground truth information corresponding to a specific time unit, so that performance of a prediction model can be flexibly monitored.

According to a second aspect, a model monitoring method is provided. The method includes: obtaining first information, where the first information includes time domain resource positions of one or more reference signals that are used for measuring ground truth information; and determining one or more pieces of ground truth information based on the first information, where the one or more pieces of ground truth information are used for obtaining a monitoring result of performance of an AI model, an output of the AI model is predicted information, and a time domain resource position of at least one piece of ground truth information in the one or more pieces of ground truth information is different from a time domain resource position of the predicted information.

In this aspect, a terminal device may obtain, by obtaining the time domain resource positions of the one or more reference signals that are used for measuring the ground truth information, ground truth information corresponding to any time domain resource position, so that performance of a prediction model can be flexibly monitored.

In a possible implementation, the method further includes: sending the one or more pieces of ground truth information.

In this implementation, the one or more pieces of ground truth information are sent to an access network device, so that the access network device can obtain a model monitoring result of an actual system based on the received one or more pieces of ground truth information, so that the performance of the prediction model can be flexibly monitored, and prediction performance can reflect actual system performance.

In another possible implementation, the method further includes: obtaining one or more pieces of predicted information, where the one or more pieces of predicted information are the output of the artificial intelligence AI model; and sending the one or more pieces of predicted information.

In this implementation, the one or more pieces of ground truth information are sent to an access network device, so that the access network device can obtain a model monitoring result of an actual system based on the received one or more pieces of ground truth information and the received one or more pieces of predicted information, so that the performance of the prediction model can be flexibly monitored, and prediction performance can reflect actual system performance.

In still another possible implementation, the method further includes: obtaining one or more pieces of predicted information, where the one or more pieces of predicted information are the output of the artificial intelligence AI model; and obtaining one or more monitoring results of the performance of the AI model based on the one or more pieces of ground truth information and the one or more pieces of predicted information.

In this implementation, the terminal device stores an AI model that can predict information, and the terminal device can further obtain a monitoring result, so that an access network device can obtain a model monitoring result of an actual system, so that the performance of the prediction model can be flexibly monitored, and prediction performance can reflect actual system performance.

In still another possible implementation, the obtaining the one or more pieces of predicted information includes: receiving second information, where the second information includes one or more second indices corresponding to the one or more pieces of predicted information, or the second information includes a relative time unit value, relative to a time unit corresponding to a reference resource, of each of the one or more pieces of predicted information; and obtaining the one or more pieces of predicted information based on the second information.

In this implementation, the terminal device may obtain corresponding predicted information based on an indication of the access network device.

In still another possible implementation, the one or more first indices and the one or more second indices are based on the time unit corresponding to the reference resource.

In still another possible implementation, the time unit corresponding to the reference resource is any one of the following: a first time unit in which a resource for reporting a monitoring result report is located; a second time unit in which downlink control signaling for scheduling model monitoring is located; a third time unit determined based on the first time unit or the second time unit; or a predefined/preconfigured fourth time unit.

In still another possible implementation, a monitoring result report is sent, where the monitoring result report includes the one or more monitoring results; the monitoring result report includes at least one monitoring result that is greater than or equal to a first threshold and that is in the one or more monitoring results; the monitoring result report includes at least one monitoring result that is less than or equal to a second threshold and that is in the one or more monitoring results; the monitoring result report includes an index of predicted information and an index of ground truth information that correspond to an optimal monitoring result in the one or more monitoring results; the monitoring result report includes an index of predicted information and an index of ground truth information that correspond to a worst monitoring result in the one or more monitoring results; or the monitoring result report includes an absolute value of a first monitoring result in a plurality of monitoring results, and a relative value, relative to the first monitoring result, of a monitoring result other than the first monitoring result in the plurality of monitoring results.

In the foregoing implementation, the terminal device may report all obtained monitoring results to the access network device, so that the access network device can obtain a complete monitoring result.

In some scenarios, the access network device may know only whether there is a monitoring result indicating that the performance of the model is good, and does not need to obtain all the monitoring results. Therefore, the monitoring result report includes the at least one monitoring result that is greater than or equal to the first threshold and that is in the one or more monitoring results. The first threshold may be configured by the access network device or predefined. In this implementation, signaling overheads can be reduced.

In some scenarios, the access network device may know only whether there is a monitoring result indicating that the performance of the model is poor, and does not need to obtain all the monitoring results. Therefore, the monitoring result report may include the at least one monitoring result that is less than or equal to the second threshold and that is in the one or more monitoring results. The second threshold may be configured by the access network device or predefined, and the second threshold is less than the first threshold. In this implementation, signaling overheads can be reduced.

In some scenarios, the access network device may know only whether there is a monitoring result indicating that the performance of the model is good, and does not need to obtain all the monitoring results. Therefore, the monitoring result report may include the index of the predicted information and the index of ground truth information that correspond to the optimal monitoring result in the one or more monitoring results. The access network device may have pre-received the one or more pieces of predicted information and the one or more pieces of ground truth information. In this case, the access network device may obtain the optimal monitoring result based on the index of the predicted information and the index of the ground truth information that correspond to the optimal monitoring result. In this implementation, signaling overheads can be reduced, and a requirement on a computing capability of the terminal device is low.

In some scenarios, the access network device may know only whether there is a monitoring result indicating that the performance of the model is poor, and does not need to obtain all the monitoring results. Therefore, the monitoring result report may include the index of the predicted information and the index of the ground truth information that correspond to the worst monitoring result in the one or more monitoring results. The access network device may have pre-received the one or more pieces of predicted information and the one or more pieces of ground truth information. In this case, the access network device may obtain the worst monitoring result based on the index of the predicted information and the index of the ground truth information that correspond to the worst monitoring result. In this implementation, signaling overheads can be reduced, and a requirement on a computing capability of the terminal device is low.

In some scenarios, the terminal device may use a differential reporting manner. The monitoring result report includes the absolute value of the first monitoring result in the plurality of monitoring results, and the relative value, relative to the first monitoring result, of the monitoring result other than the first monitoring result in the plurality of monitoring results. In this implementation, signaling overheads can be reduced.

In still another possible implementation, the first monitoring result is determined based on an order of the ground truth information used and/or an order of the predicted information used during obtaining of the plurality of monitoring results.

In this implementation, a generation order of the one or more monitoring results may be determined based on an order of the ground truth information used and/or an order of the predicted information used during generation of the monitoring results by the terminal device, so that the first monitoring result can be determined based on the generation order.

In still another possible implementation, the terminal device may report a part of monitoring results based on the indication of the access network device. For example, the terminal device may be indicated, in a bitmap (bitmap) manner, to report a part of all the monitoring results.

In still another possible implementation, the monitoring result report and information feedback that is used for sending a measurement result of a reference signal are reported in a same information report, or the monitoring result report and the information feedback that is used for sending the measurement result of the reference signal are reported in different information reports.

According to a third aspect, a model monitoring method is provided. The method includes: sending first information, where the first information includes one or more first indices corresponding to one or more pieces of ground truth information; and receiving the one or more pieces of ground truth information corresponding to the one or more first indices, where the one or more pieces of ground truth information are used for obtaining a monitoring result of performance of an artificial intelligence AI model, and an output of the AI model is predicted information.

In this aspect, an access network device indicates the one or more first indices of the one or more pieces of ground truth information to a terminal device, so that the terminal device can obtain ground truth information corresponding to a specific time unit, so that performance of a prediction model can be flexibly monitored.

According to a fourth aspect, a model monitoring method is provided. The method includes: sending first information, where the first information includes time domain resource positions of one or more reference signals that are used for measuring ground truth information; and receiving one or more pieces of ground truth information based on the first information, where the one or more pieces of ground truth information are used for obtaining a monitoring result of performance of an AI model, an output of the AI model is predicted information, and a time domain resource position of at least one piece of ground truth information in the one or more pieces of ground truth information is different from a time domain resource position of the predicted information.

In this aspect, an access network device indicates, to a terminal device, the time domain resource positions of the one or more reference signals that are used for measuring the ground truth information, so that the terminal device can obtain ground truth information corresponding to any time domain resource position, so that performance of a prediction model can be flexibly monitored.

In a possible implementation, the method further includes: obtaining one or more pieces of predicted information; and obtaining one or more monitoring results of the performance of the AI model based on the one or more pieces of ground truth information and the one or more pieces of predicted information.

In another possible implementation, the method further includes: receiving a monitoring result report, where the monitoring result report includes one or more monitoring results, and the one or more monitoring results are obtained based on the one or more pieces of ground truth information and one or more pieces of predicted information.

In still another possible implementation, the method includes: sending second information, where the second information includes one or more second indices corresponding to the one or more pieces of predicted information, or the second information includes a relative time unit value, relative to a time unit corresponding to a reference resource, of each of the one or more pieces of predicted information; and receiving the one or more pieces of predicted information.

In still another possible implementation, the one or more first indices and the one or more second indices are based on the time unit corresponding to the reference resource.

In still another possible implementation, the time unit corresponding to the reference resource is any one of the following: a first time unit in which a resource for reporting a monitoring result report is located; a second time unit in which downlink control signaling for scheduling model monitoring is located; a third time unit determined based on the first time unit or the second time unit; or a predefined/preconfigured fourth time unit.

In still another possible implementation, the monitoring result report includes the one or more monitoring results; the monitoring result report includes at least one monitoring result that is greater than or equal to a first threshold and that is in the one or more monitoring results; the monitoring result report includes at least one monitoring result that is less than or equal to a second threshold and that is in the one or more monitoring results; the monitoring result report includes an index of predicted information and an index of ground truth information that correspond to an optimal monitoring result in the one or more monitoring results; the monitoring result report includes an index of predicted information and an index of ground truth information that correspond to a worst monitoring result in the one or more monitoring results; or the monitoring result report includes an absolute value of a first monitoring result in a plurality of monitoring results, and a relative value, relative to the first monitoring result, of a monitoring result other than the first monitoring result in the plurality of monitoring results.

In still another possible implementation, the first monitoring result is determined based on an order of the ground truth information used and/or an order of the predicted information used during obtaining of the plurality of monitoring results.

In still another possible implementation, the access network device may alternatively indicate the terminal device to report a part of monitoring results. For example, the terminal device may be indicated, in a bitmap manner, to report a part of all monitoring results.

In still another possible implementation, the monitoring result report and information feedback that is used for sending a measurement result of a reference signal are reported in a same information report, or the monitoring result report and the information feedback that is used for sending the measurement result of the reference signal are reported in different information reports.

In any one of the first aspect to the fourth aspect, the predicted information is predicted channel state information (channel state information, CSI), and the ground truth information is ground truth CSI; or the predicted information is predicted beam information, and the ground truth information is ground truth beam information.

The predicted beam information may be one or more of a predicted optimal beam or a reference signal received power (reference signal received power, RSRP) of the predicted optimal beam. The ground truth beam information may be one or more of an actual optimal beam or RSRP of the actual optimal beam. In other words, the ground truth beam information includes at least one of the following: a ground truth optimal beam or ground truth reference signal received power.

The method in the first aspect and the method in the second aspect may be performed by a terminal device, may be performed by a module (for example, a processor, a chip, or a chip system) used in the terminal device, or may be implemented by a logical node, a logical module, or software that can implement all or a part of functions of the terminal device.

The method in the third aspect and the method in the fourth aspect may be performed by an access network device, may be performed by a module (for example, a processor, a chip, or a chip system) used in the access network device, or may be implemented by a logical node, a logic module, or software that can implement all or a part of functions of the access network device.

According to a fifth aspect, a model monitoring apparatus is provided, and is configured to implement the model monitoring method in the first aspect or any one of implementations of the first aspect, or configured to implement the model monitoring method in the second aspect or any one of implementations of the second aspect. The apparatus may be a terminal device, a module (for example, a processor, a chip, or a chip system) used in the terminal device, or a logical node, a logical module, or software that can implement all or a part of functions of the terminal device. In an implementation, the model monitoring apparatus may include a sending unit and a receiving unit, and may further include a processing unit. The sending unit and the receiving unit may be independent of each other, or may be combined together (which may be referred to as a "transceiver unit").

According to a sixth aspect, a model monitoring apparatus is provided, and is configured to implement the model monitoring method in the third aspect or any one of implementations of the third aspect, or configured to implement the model monitoring method in the fourth aspect or any one of implementations of the fourth aspect. The apparatus may be an access network device, a module (for example, a processor, a chip, or a chip system) used in the access network device, or a logical node, a logical module, or software that can implement all or a part of functions of the access network device. In an implementation, the model monitoring apparatus may include a sending unit and a receiving unit, and may further include a processing unit. The sending unit and the receiving unit may be independent of each other, or may be combined together (which may be referred to as a "transceiver unit").

In a possible implementation, the model monitoring apparatus in the fifth aspect and the sixth aspect includes modules configured to separately perform the method in any one of the first aspect to the fourth aspect or any one of implementations of the first aspect to the fourth aspect.

In another possible implementation, the model monitoring apparatus in the fifth aspect and the sixth aspect includes a processor coupled to a memory, where the processor is configured to implement a corresponding function in the model monitoring method, and the method is performed by the apparatus. The memory is configured to be coupled to the processor, and stores a program (instructions) and/or data necessary for the apparatus. Optionally, the model monitoring apparatus may further include a communication interface, to implement communication between the apparatus and another network element. Optionally, the memory may be located inside the model monitoring apparatus, or may be located outside the model monitoring apparatus.

In still another possible implementation, the model monitoring apparatus in the fifth aspect and the sixth aspect includes a processor and a transceiver apparatus. The processor is coupled to the transceiver apparatus, and the processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a model monitoring apparatus other than the model monitoring apparatus and perform transmission of the signal to the processor, or send a signal from the processor to a model monitoring apparatus other than the model monitoring apparatus. When the model monitoring apparatus is a chip, the transceiver apparatus is a transceiver circuit or an input/output interface.

When the model monitoring apparatus in the fifth aspect and the sixth aspect is a chip, the sending unit may be an output unit, for example, an output circuit or a communication interface, and the receiving unit may be an input unit, for example, an input circuit or a communication interface. When the model monitoring apparatus is a terminal, the sending unit may be a transmitter or a transmitter machine, and the receiving unit may be a receiver or a receiver machine.

According to a seventh aspect, a computer-readable storage medium is provided, where the computer-readable storage medium stores a computer program or instructions. When the computer program or the instructions are executed, the method according to the foregoing aspects is implemented.

According to an eighth aspect, a computer program product including instructions is provided. When the instructions are run on a model monitoring apparatus, the model monitoring apparatus is caused to perform the method according to the foregoing aspects.

According to a ninth aspect, a model monitoring system is provided, where the model monitoring system includes the model monitoring apparatus according to the fifth aspect and the model monitoring apparatus according to the sixth aspect.

## BRIEF DESCRIPTION OF DRAWINGS

FIG. 1 is a simplified diagram of a wireless communication system according to an embodiment of this application;
FIG. 2A is a diagram of a neuron structure;
FIG. 2B is a diagram of a neural network;
FIG. 2C is an AI application framework;
FIG. 3 is a diagram of a communication system in which an AI network element is introduced;
FIG. 4A to FIG. 4D are a diagram of a network architecture according to an embodiment of this application;
FIG. 5 is a schematic flowchart of a model monitoring method according to an embodiment of this application;
FIG. 6 is a schematic flowchart of another model monitoring method according to an embodiment of this application;
FIG. 7 is a diagram of an example of predicting CSI based on an AI model according to an embodiment of this application;
FIG. 8 is a schematic flowchart of still another model monitoring method according to an embodiment of this application;
FIG. 9 is a diagram of an example of a reference resource according to an embodiment of this application;
FIG. 10 is a schematic flowchart of another model monitoring method according to an embodiment of this application;
FIG. 11 is a schematic flowchart of still another model monitoring method according to an embodiment of this application;
FIG. 12 is a schematic flowchart of still another model monitoring method according to an embodiment of this application;

FIG. 13 is a schematic flowchart of still another model monitoring method according to an embodiment of this application;

FIG. 14 is a diagram of an example of reporting a monitoring result report according to an embodiment of this application;

FIG. 15 is a schematic flowchart of still another model monitoring method according to an embodiment of this application;

FIG. 16 is a schematic flowchart of still another model monitoring method according to an embodiment of this application;

FIG. 17 is a schematic flowchart of still another model monitoring method according to an embodiment of this application;

FIG. 18 is a diagram of a structure of a model monitoring apparatus according to an embodiment of this application; and

FIG. 19 is a diagram of a structure of another model monitoring apparatus according to an embodiment of this application.

## DESCRIPTION OF EMBODIMENTS

The following describes embodiments of this application with reference to the accompanying drawings in embodiments of this application.

To make the objectives, technical solutions, and advantages of this application clearer, the following further describes in detail this application with reference to the accompanying drawings.

"At least one piece (item)" involved in this application below indicates one piece (item) or a plurality of pieces (items). A plurality of pieces (items) means two or more pieces (items). The term "and/or" describes an association relationship between associated objects, and indicates that three relationships may exist. For example, A and/or B may indicate the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that, in this application, words such as "example" or "for example" are used for representing giving an example, an illustration, or a description. Any method or design scheme described as an "example" or "for example" in this application should not be construed as being preferred or having more advantages than another method or design scheme. Exactly, use of the words such as "example" or "for example" is intended to present a related concept in a specific manner.

The technologies provided in this application may be applied to various communication systems. For example, the communication system may be a 4th generation ($4^{th}$ generation, 4G) communication system (for example, a long term evolution (long term evolution, LTE) system), a 5th generation ($5^{th}$ generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6G communication system. The 5G communication system may also be referred to as a new radio (new radio, NR) system.

A network element in the communication system may send a signal to another network element or receive a signal from another network element. The signal may include information, signaling, data, and the like. The network element may alternatively be replaced with an entity, a network entity, a device, a terminal device, a communication module, a node, a communication node, or the like. In this application, the network element is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may also send signals to each other. That is, both a signal sending network element and a signal receiving network element may be terminal devices.

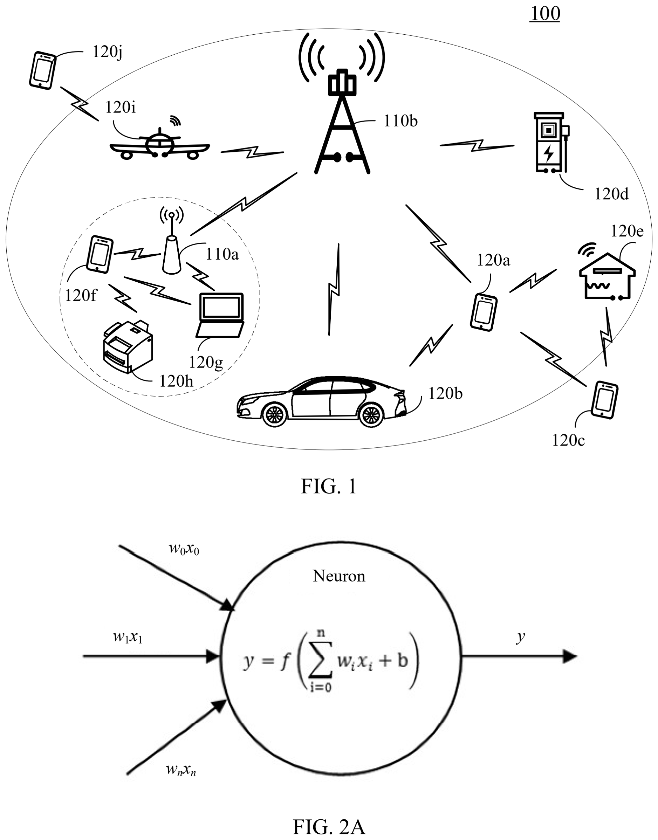

A model monitoring method provided in embodiments of this application may be applied to a wireless communication system, for example, a 5G system, a 6G system, or a satellite communication system. FIG. 1 is a simplified diagram of a wireless communication system according to an embodiment of this application. As shown in FIG. 1, the wireless communication system includes a radio access network 100. The radio access network 100 may be a next generation (for example, 6G or higher-version) radio access network, or a conventional (for example, 5G or 4G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 1 is merely a diagram. The wireless communication system may further include another device, for example, may further include a core network device, a wireless relay device, and/or a wireless backhaul device, which are not shown in FIG. 1.

Optionally, in an actual application, the wireless communication system may include a plurality of network devices (also referred to as access network devices), or may include a plurality of terminal devices. One network device may serve one or more terminal devices. One terminal device may also access one or more network devices. A quantity of terminal devices and a quantity of network devices that are included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may broadly cover various names in the following, or may be replaced with the following name, for example, a RAN node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmission reception point (transmission reception point, TRP), a transmitting point (transmitting point, TP), a main station MeNB, a secondary station SeNB, a multi-standard radio (multi-standard radio, MSR) node, a home base station, a network controller, an access node, a radio node, an access point (access point, AP), a transmission node, a transceiver node, a baseband unit (building baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, or a positioning node. The base station may be a macro base station, a micro base station, a relay node, a donor node, or the like, or may be a combination thereof. Alternatively, the network device may be a communication module, a modem, or a chip disposed in the foregoing device or apparatus. Alternatively, the network device may be a mobile switching center, a device that takes on a function of the base station in device-to-device (device-to-device, D2D), vehicle-to-everything (vehicle-to-everything, V2X), and machine-to-machine (machine-to-machine, M2M) communication, a network side device in a 6G network, a device that takes on a function of the base station in a future communication system, or the like. The network device may support networks with a same access technology or different access technologies. A specific technology and a specific device form that are used by the network device are not limited in embodiments of this application.

The network device may be fixed or mobile. For example, base stations 110a and 110b are stationary, and are responsible for wireless transmission and reception in one or more cells from the terminal device 120. A helicopter or an uncrewed aerial vehicle 120i shown in FIG. 1 may be configured to serve as a mobile base station, and one or more cells may move based on a position of the mobile base station 120i. In another example, the helicopter or the uncrewed aerial vehicle (120i) may be configured to serve as a terminal device communicating with the base station 110b.

In this application, a communication apparatus configured to implement a function of the access network may be an access network device, a network device having a part of functions of the access network, or an apparatus that can support implementation of the function of the access network, for example, a chip system, a hardware circuit, a software module, or a hardware circuit plus a software module. The apparatus may be mounted in the access network device or used together with the access network device. In the method in this application, an example in which the communication apparatus configured to implement the function of the access network device is an access network device is used for description.

The terminal device may be an entity, for example, a mobile phone, that is configured to receive or perform transmission of a signal on a user side. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, and the like. The terminal device may be a portable, pocket-sized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine-type communication (machine-type communication, MTC), the internet of things (internet of things, IoT), virtual reality (virtual reality, VR), augmented reality (augmented reality, AR), industrial control, self-driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal device 120 are a 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, a flight, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device, for example, a smartwatch, a VR device, an AR device, a wireless terminal in industrial control (industrial control), a terminal in an internet of vehicles system, a wireless terminal in self-driving (self-driving), a wireless terminal in a smart grid (smart grid), a wireless terminal in transportation security (transportation safety), a wireless terminal in a smart city (smart city), for example, a smart fuel dispenser, a terminal device on a high-speed train, and a wireless terminal in smart home (smart home), for example, a smart speaker, a smart coffee machine, or a smart printer. The terminal device 120 may be a wireless device in the foregoing scenarios or an apparatus configured to be disposed in the wireless device, for example, a communication module, a modem, or a chip in the foregoing device. The terminal device may also be referred to as a terminal, a terminal equipment, a user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device, a general-purpose device, or the like. A specific technology and a specific device form that are used by the terminal device are not limited in embodiments of this application.

Optionally, the terminal device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this application, a communication apparatus configured to implement a function of the terminal device may be a terminal device, a terminal device having a part of functions of the terminal device, or an apparatus that can support implementation of the foregoing function of the terminal device, for example, a chip system. The apparatus may be mounted in the terminal device or used together with the terminal device. In this application, the chip system may include a chip, or may include the chip and another discrete device. In the technical solutions provided in this application, an example in which the communication apparatus is a terminal device or a UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be deployed in different places. For example, the RRU is remotely deployed in an area with high traffic volume, and the BBU is deployed in a central equipment room. Alternatively, the BBU and the RRU may be deployed in a same equipment room. Alternatively, the BBU and the RRU may be different components in a rack. Optionally, one cell may correspond to one carrier or component carrier.

In some deployments, the network device mentioned in embodiments of this application may be a device including a CU or a DU, a device including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, there is a transfer of a part of downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, IFFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, a split manner between the DU and RU are different, corresponding to different categories (categories, Cats) of eCPRIs, such as eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions after the demapping (for example, one or more of digital BF or fast Fourier transform (fast Fourier transform, FFT)/CP removal) are moved to the RU for implementation. It may be understood that, for function descriptions of DUs and RUs corresponding to various categories of eCPRIs, refer to an eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names. However, a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that, this application may be applied between an access network device and a terminal device.

Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal device may further include an artificial intelligence (artificial intelligence, AI) layer for transmission of data related to an AI function.

Data transmission between the access network device and the terminal device is used as an example. The data transmission needs to pass through a user plane protocol layer, for example, the SDAP layer, the PDCP layer, the RLC layer, the MAC layer, or the physical layer. The SDAP layer, the PDCP layer, the RLC layer, the MAC layer, and the physical layer may also be collectively referred to as an access stratum. A data transmission direction is divided into sending or receiving, and each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Corresponding encapsulation is performed on the data at each layer. For example, data received by a specific layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

To support AI technologies in a wireless network, an AI node may be further introduced into the network.

Optionally, the AI node may be deployed at one or more of the following positions in the communication system:

an access network device, a terminal device, a core network device, or the like. Alternatively, the AI node may be independently deployed, for example, deployed at a position other than any one of the foregoing devices, for example, a host or a cloud server in an over-the-top (over-the-top, OTT) system. The AI node may communicate with another device in the communication system. For example, the another device may be one or more of the following: a network device, a terminal device, or a network element of a core network.

It may be understood that, a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

One or more AI modules are disposed in one or more devices of these network element nodes, such as a core network device, an access network node (a RAN node), a terminal, or an OAM. The access network node may serve as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of neural network layers, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain an output through inference, and the output includes one or more parameters. Learning processes, training processes, or inference processes of different models may be deployed on different nodes or devices, or may be deployed on a same node or device.

The communication system includes a RAN intelligent controller (RAN intelligent controller, RIC). For example, the RIC may be the AI module, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be several seconds. A real-time RIC mainly processes near-real-time information, for example, latency-sensitive data. A latency of the data is tens of milliseconds.

The near-real-time RIC is configured to perform model training and inference, for example, is configured to train an AI model and perform inference by using the AI model. The near-real-time RIC may obtain information on a network side and/or a terminal side from the RAN node (for example, a CU, a CU-CP, a CU-UP, a DU, and/or an RU) and/or the terminal. The information may be used as training data or inference data. Optionally, the near-real-time RIC may deliver an inference result to the RAN node and/or the terminal. Optionally, an inference result may be exchanged between the CU and the DU and/or between the DU and the RU. For example, the near-real-time RIC delivers an inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from the RAN node (for example, a CU, a CU-CP, a CU-UP, a DU, and/or an RU) and/or the terminal. The information may be used as training data or inference data, and an inference result may be delivered to the RAN node and/or the terminal. Optionally, an inference result may be exchanged between the CU and the DU and/or between the DU and the RU. For example, the non-real-time RIC delivers an inference result to the DU, and the DU sends the inference result to the RU.

Alternatively, the near-real-time RIC and the non-real-time RIC each may be independently disposed as a network element. Optionally, the near-real-time RIC and the non-real-time RIC may alternatively serve as a part of another device. For example, the near-real-time RIC is disposed on the RAN node (for example, the CU or the DU), and the non-real-time RIC is disposed in an OAM, a cloud server, a core network device, or another network device.

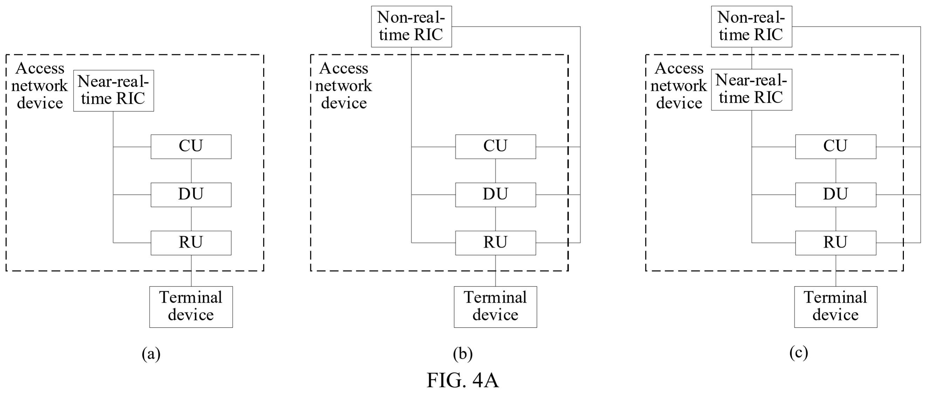

For example, disposition of the near-real-time RIC and the non-real-time RIC in a network architecture may be as shown in FIG. 4A to FIG. 4D.

As shown in (a) in FIG. 4A, in a first possible implementation, the access network device includes a near-real-time RIC module, to perform model learning and/or inference.

As shown in (b) in FIG. 4A, in a second possible implementation, in the communication system, a non-real-time RIC may be included outside the access network device. Optionally, the non-real-time RIC may be located in an OAM or a core network device.

As shown in (c) in FIG. 4A, in a third possible implementation, the access network device includes a near-real-time RIC, and a non-real-time RIC is further included outside the access network device. Optionally, the non-real-time RIC may be located in an OAM or a core network device.

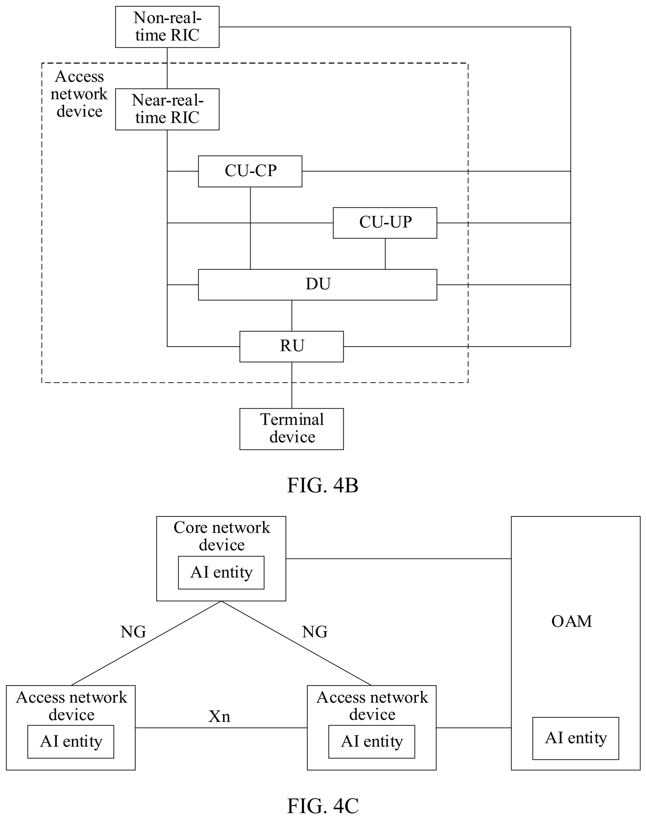

In comparison with (c) in FIG. 4A, in FIG. 4B, the CU is separated into a CU-CP and a CU-UP. The near-real-time RIC and the non-real-time RIC are disposed in a same way as (c) in FIG. 4A.

As shown in FIG. 4C, optionally, the access network device includes one or more AI entities, and a function of the AI entity is similar to that of the near-real-time RIC. Optionally, the OAM includes one or more AI entities, and a function of the AI entity is similar to that of the non-real-time RIC. Optionally, the core network device includes one or more AI entities, and a function of the AI entity is similar to that of the non-real-time RIC. When the OAM and the core network device each include an AI entity, models obtained through training by the AI entities of the OAM and the core network device are different, and/or models configured to perform inference are different. In this application, that the models are different includes at least one of the following: structure parameters of the models (for example, quantities of layers and/or weights of the models) are different, input parameters of the models are different, or output parameters of the models are different.

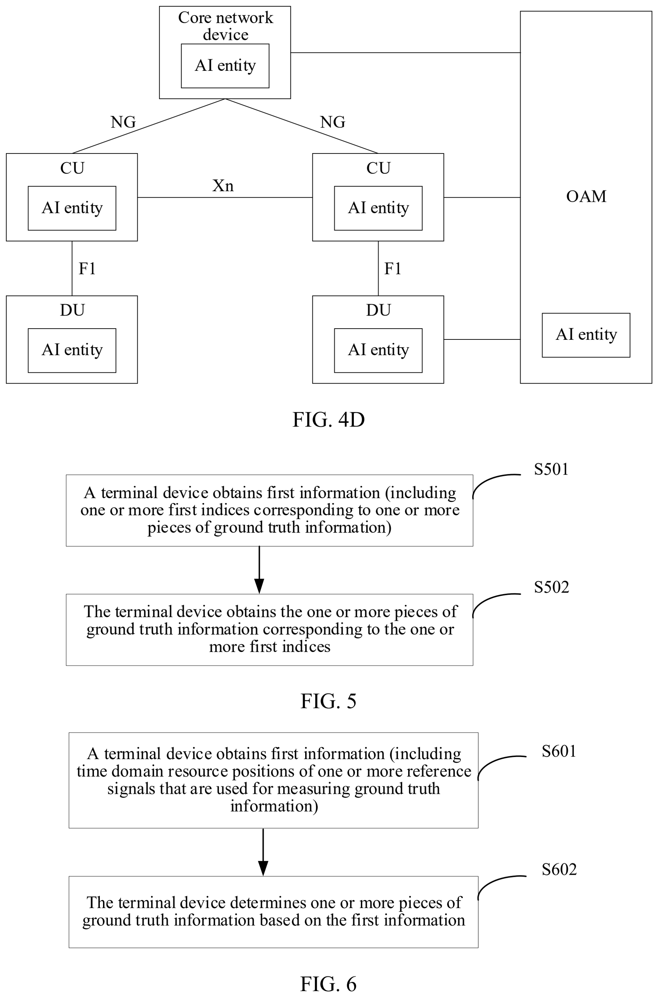

In comparison with FIG. 4C, the access network device in FIG. 4D is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by AI entities of the CU and the DU are different, and/or models configured to perform inference are different. Optionally, the CU in FIG. 4D may be further split into a CU-CP and a CU-UP. Optionally, one or more AI models may be deployed in the CU-CP, and/or one or more AI models may be deployed in the CU-UP. Optionally, in FIG. 4C or FIG. 4D, an OAM of the access network device and an OAM of the core network device may be separately and independently deployed.

It should be understood that, a quantity and types of devices in the communication system shown in FIG. 1 are merely used as an example. This application is not limited thereto. In an actual application, the communication system may further include more terminal devices and more access network devices, and may further include another network element, for example, may include a core network device and/or a network element configured to implement an artificial intelligence function.

It may be understood that, all or a part of functions implemented by one or more of the terminal device, the access network device, the core network device, or the network element configured to implement the artificial intelligence function may be virtualized, that is, implemented by using one or more of a dedicated processor or a general-purpose processor and a corresponding software module. Because the terminal device and the access network device are related to an air interface transmission interface, a transceiver function of the interface may be implemented by hardware. Core network devices such as an operations, administration, and maintenance (operations, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

For ease of understanding, the following first describes AI technologies in this application. It may be understood that, the description is not intended to limit this application.

(1) AI model

AI refers to intelligence exhibited by machines made by people. Usually, the artificial intelligence is a technology that presents human intelligence by using a normal computer program. The artificial intelligence may be defined as a machine or a computer that mimics humans and has cognitive functions related to human thinking, such as learning and resolving problems. The artificial intelligence can learn from past experience, make reasonable decisions, and respond quickly. An objective of the artificial intelligence is to understand intelligence by building symbolic inference or computer programs for inference.

Machine learning is a way to implement artificial intelligence, that is, to resolve problems in the artificial intelligence by using the machine learning as a means. A machine learning theory is mainly to design and analyze some algorithms that enable a computer to automatically "learn". A machine learning algorithm is an algorithm that automatically analyzes data to obtain a rule and uses the rule to predict unknown data. Because the learning algorithm involves a large quantity of statistical theories, the machine learning is particularly closely related to inferential statistics, and is also referred to as statistical learning theory.

The AI model is an algorithm or a computer program that can implement an AI function, and is a specific implementation of an AI technical function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

(2) Neural network

The neural network is a specific implementation form of AI technologies or machine learning technologies. According to a universal approximation theorem, the neural network can theoretically approximate any continuous function, so that the neural network has a capability of learning any mapping. Therefore, the neural network can accurately perform abstract modeling for a complex high-dimensional problem.

The idea of the neural network is derived from a neuron structure of brain tissue. For example, each neuron performs a weighted summation operation on input values of the neuron, and outputs an operation result by using an activation function. FIG. 2A is a diagram of a neuron structure. It is assumed that inputs of the neuron are $x = [x_0, x_1, ..., x_n]$, and weights corresponding to the inputs are respectively $w = [w, w_1, ..., w_n]$, where $w_i$ is used as a weight of $x_i$, and is used for weighing $x_i$. A bias for performing weighted summation on input values based on the weights is, for example, b. The activation function may have a plurality of forms. It is assumed that an activation function of one neuron is $y = f(z) = \max(0, z)$. In this case, an output of the neuron is:

$$y = f\left(\sum_{i=0}^{i=n} w_i * x_i + b\right) = \max\left(0, \sum_{i=0}^{i=n} w_i * x_i + b\right)$$ . For another example, if an activation function of a neuron is $y = f(z) = z$, an output of the neuron is:

$$y = f\left(\sum_{i=0}^{i=n} w_i * x_i + b\right) = \sum_{i=0}^{i=n} w_i * x_i + b$$ .b, $w_i$, and $x_i$ may be various possible values such as decimals, integers (for example, 0, positive integers, or negative integers), or complex numbers. Activation functions of different neurons in the neural network may be the same or different.

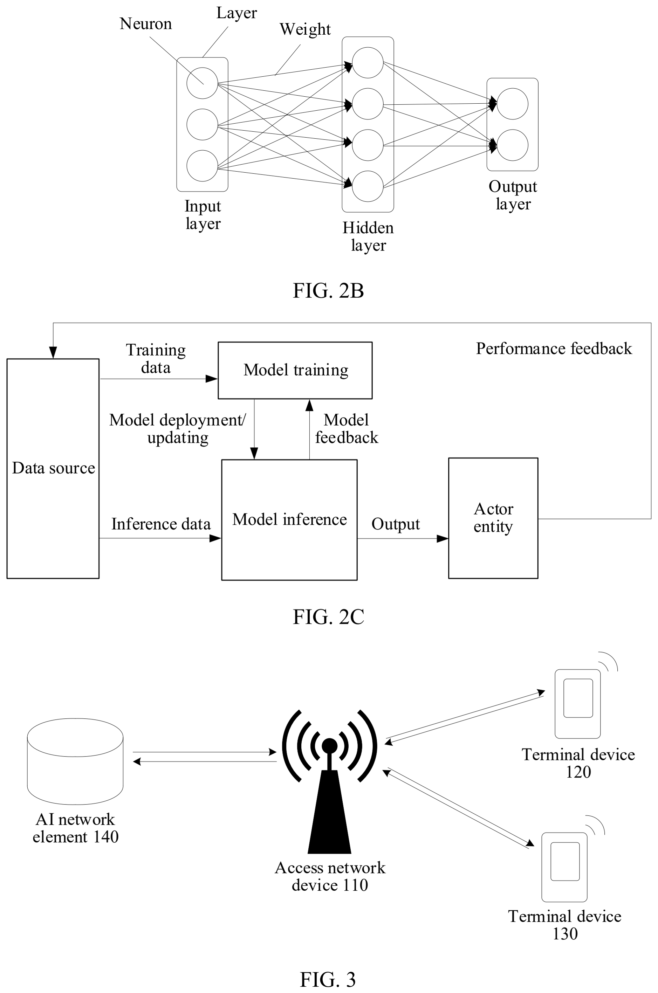

The neural network generally includes a plurality of layers, and each layer may include one or more neurons. A depth and/or a width of the neural network are/is increased, so that an expression capability of the neural network can be improved, and a more powerful information extraction and abstract modeling capability can be provided for a complex system. The depth of the neural network may be a quantity of layers that are included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to a diagram of a neural network in FIG. 2B. The input layer of the neural network performs neuron processing on received input information, and transfers a processing result to an intermediate hidden layer. The hidden layer performs computation on the received processing result to obtain a computation result, and the hidden layer transfers the computation result to the output layer or an adjacent hidden layer. Finally, the output layer obtains an output result of the neural network. One neural network may include one hidden layer, or include a plurality of hidden layers that are sequentially connected. This is not limited.

For example, a type of an AI model is the neural network. The AI model in this application may be a deep neural network (deep neural network, DNN). According to a network building manner, the DNN may include a feedforward neural network (feedforward neural network, FNN), a convolutional neural network (convolutional neural network, CNN), and a recurrent neural network (recurrent neural network, RNN).

(3) Training dataset and inference data

The training dataset is used for training an AI model. The training dataset may include an input of the AI model, or include an input of the AI model and a target output of the AI model. The training dataset includes one or more pieces of training data. The training data may be a training sample that is input into the AI model, or may be a target output of the AI model. The target output may also be referred to as a label or a label sample. The training dataset is one of important parts of machine learning. In essence, model training is to learn some features from the training data, so that an output of the AI model is as close as possible to the target output. For example, a difference between the output of the AI model and the target output is minimized as much as possible. To some extent, composition and selection of the training dataset can determine performance of an AI model obtained through training.

In addition, a loss function may be defined in a training process of the AI model (for example, a neural network). The loss function describes a gap or a difference between an output value of the AI model and a target output value. A specific form of the loss function is not limited in this application. The training process of the AI model is a process in which a model parameter of the AI model is adjusted, so that a value of the loss function is less than a threshold, or the value of the loss function satisfies a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of a neuron.

The inference data may be used as an input of a trained AI model for inference of the AI model. During model inference, the inference data is input to the AI model, and a corresponding output, namely, an inference result, can be obtained.

(4) AI model design

The AI model design mainly includes a data collection phase (for example, collection of training data and/or inference data), a model training phase, and a model inference phase. Further, an inference result application phase may also be included. FIG. 2C shows an AI application framework. In the data collection phase, a data source (data source) is used for providing a training dataset and inference data. In the model training phase, the training data (training data) provided by the data source is analyzed or trained, so that an AI model is obtained. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used for performing inference based on the inference data provided by the data source, to obtain an inference result. This phase may also be understood as that the inference data is input to the AI model, to obtain an output via the AI model, where the output is the inference result. The inference result may indicate a configuration parameter used (executed) by an actor object, and/or an operation performed by the actor object. The inference result is published in the inference result application phase. For example, the inference result may be uniformly planned by an actor (actor) entity. For example, the actor entity may send the inference result to one or more actor objects (for example, a core network device, an access network device, or a terminal device) for execution. For another example, the actor entity may further feed back performance of the model to the data source, to facilitate subsequent implementation of model updating and training.

It may be understood that, a communication system may include a network element having an artificial intelligence function. The foregoing phases related to the AI model design may be performed by one or more network elements having the artificial intelligence function. In a possible design, the AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The network management system may classify network management work into three categories based on an actual requirement of network operations of an operator: operations (Operations), administration (Administration), and maintenance (Maintenance). The network management system may also be referred to as an operations, administration, and maintenance (operations, administration, and maintenance, OAM) network element, OAM for short. The operations mainly refer to routine analysis, prediction, planning, and configuration for networks and services. The maintenance mainly refers to routine operation activities for tests and fault management of networks and services of the networks. The network management system can detect a network running status, optimize network connections and performance, improve network running stability, and reduce network maintenance costs. Alternatively, in another possible design, an independent network element may be introduced into the communication system to perform an AI-related operation, for example, AI model training. The independent network element may be referred to as an AI network element, an AI node, or the like. This name is not limited in this application. The AI network element may be directly connected to an access network device in the communication system, or may be indirectly connected to the access network device via a third-party network element. The third-party network element may be a core network element, for example, an authentication management function (authentication management function, AMF) network element or a user plane function (user plane function, UPF) network element, an OAM, a cloud server, or another network element. This is not limited. For example, refer to FIG. 3. The communication system includes an access network device 110, terminal devices 120 and 130, and an AI network element 140 is further introduced into the communication system shown in FIG. 1.

In this application, one or more parameters may be obtained through inference by one model. Training processes of different models may be deployed on different devices or nodes, or may be deployed on a same device or node. Inference processes of different models may be deployed on different devices or nodes, or may be deployed on a same device or node.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that, the input dimension may be a size of one piece of input data. For example, when the input data is a sequence, an input dimension corresponding to the sequence may indicate a length of the sequence. The quantity of the input ports may be an amount of the input data. Similarly, the output dimension may be a size of one piece of output data. For example, when the output data is a sequence, an output dimension corresponding to the sequence may indicate a length of the sequence. The quantity of the output ports may be an amount of the output data. For a possibility proposed in the background that prediction performance obtained based on a prediction model cannot reflect actual system performance, this application provides a model monitoring solution. A terminal device may obtain, by obtaining one or more first indices of one or more pieces of ground truth information, ground truth information corresponding to a specific time unit, for example, a needed time unit, so that performance of the prediction model can be flexibly monitored.

In this application, "sending information to...(for example, a terminal device)" or a related description in the accompanying drawings may be understood as that a destination end of the information is the terminal device, and may include directly or indirectly sending the information to the terminal device; and "receiving information of...(for example, a terminal device)", "receiving information from...(a terminal device)", or a related description in the accompanying drawings may be understood as that a source end of the information is the terminal device, and may include directly or indirectly receiving the information from the terminal device. The information may undergo necessary processing, for example, a format change, between the source end for sending the information and the destination end. However, the destination end may understand valid information from the source end. A similar expression in this application may be understood similarly. Details are not described herein.

The following describes in detail the model monitoring method provided in embodiments of this application. It may be understood that in this application, an example in which an access network device and a terminal device serve as execution bodies of an interaction example is used for description. However, the execution body of the interaction example is not limited in this application. For example, the access network device in the method provided in this application may alternatively be a chip, a chip system, or a processor used in the access network device, or may be a logical node, a logical module, or software that can implement all or a part of functions of the access network device. The terminal device in the method provided in this application may alternatively be a chip, a chip system, or a processor used in the terminal device, or may be a logical node, a logical module, or software that can implement all or a part of functions of the terminal device.

FIG. 5 is a schematic flowchart of a model monitoring method according to an embodiment of this application. For example, the method may include the following steps.

S501: A terminal device obtains first information.

Model monitoring in this embodiment of this application refers to monitoring performance of an AI model, to determine whether the AI model works normally. If the performance of the AI model is poor, a non-AI mode needs to be switched to, the AI model needs to be replaced or updated, or the like. The model monitoring may be monitoring accuracy of an output of the AI model (which may also be referred to as an intermediate KPI). The accuracy of the output of the AI model is monitored by comparing the output of the AI model with a corresponding label or ground truth, to determine whether the performance of the AI model satisfies a requirement. The intermediate KPI usually includes a generalized cosine similarity (generalized cosine similarity, GCS), a square generalized cosine similarity (square generalized cosine similarity, SGCS), a minimum mean square error (mean square error, MSE), a normalized mean square error (normalized mean square error, NMSE), and the like.

Two types of information are needed for computing the intermediate KPI of the AI model. One type is to-be-monitored information, for example, predicted information output by the AI model. The other type is label information or ground truth information, namely, a $\text{KPI}(H, \hat{H})$, where $H$ is the ground truth information, and $\hat{H}$ is the predicted information. The ground truth information means that the information may be considered as accurate. For example, information measured by the terminal device may be considered as ground truth information relative to predicted information. The $\text{KPI}(H, \hat{H})$ usually indicates a dissimilarity measure or a similarity measure between $H$ and $\hat{H}$.

In this embodiment, an index of the ground truth information indicates the specific piece of ground truth information obtained by the terminal device.

The terminal device obtains the first information, where the first information includes one or more first indices corresponding to one or more pieces of ground truth information. For example, the terminal device may obtain the first information sent by an access network device, or may obtain the first information prestored by the terminal device.

S502: The terminal device obtains the one or more pieces of ground truth information corresponding to the one or more first indices.

After obtaining the one or more first indices corresponding to the one or more pieces of ground truth information, the terminal device measures reference signals in slots that respectively correspond to the one or more indices, to obtain the one or more pieces of ground truth information corresponding to the one or more first indices, where

the one or more pieces of ground truth information are used for obtaining a monitoring result of the performance of the AI model, and an output of the AI model is predicted information.

In comparison with a conventional technology in which only a model monitoring result at a grid can be periodically obtained, in this embodiment, the terminal device may obtain, by obtaining the one or more first indices of the one or more pieces of ground truth information, ground truth information corresponding to a specific time unit.

According to the model monitoring method provided in this embodiment of this application, the terminal device may obtain, by obtaining the one or more first indices corresponding to the one or more pieces of ground truth information, the ground truth information corresponding to the specific time unit, so that performance of a prediction model can be flexibly monitored.

FIG. 6 is a schematic flowchart of another model monitoring method according to an embodiment of this application. Different from the embodiment shown in FIG. 5, in this embodiment, an index of ground truth information is not directly used to indicate a terminal device to obtain the specific piece of ground truth information, and the ground truth information is determined based on a time domain resource position of a reference signal that is used for measuring the ground truth information. For example, the method may include the following steps.

S601: The terminal device obtains first information.

The reference signal used for measuring the ground truth information (that is, used for model monitoring) and a reference signal used for model inference (used as an input of a model for information prediction) may be reference signals in a same group, that is, belong to a same reference signal configuration. Alternatively, the reference signal used for measuring the ground truth information and the reference signal used for model inference may be reference signals in different groups, that is, a reference signal is specially configured for the model monitoring.

In this embodiment, the reference signal used for measuring the ground truth information and the reference signal used for model inference are reference signals in different groups. The terminal device may determine the ground truth information based on the reference signal used for measuring the ground truth information. Therefore, the terminal device may obtain the first information, where the first information includes time domain resource positions of one or more reference signals that are used for measuring the ground truth information.

For example, the terminal device may obtain the first information sent by an access network device, or may obtain the first information prestored by the terminal device.

S602: The terminal device determines one or more pieces of ground truth information based on the first information.

After obtaining the first information, the terminal device may determine the one or more pieces of ground truth information based on the first information.

In an implementation, by default, the terminal device may measure the one or more reference signals at the time domain resource positions that are of the one or more reference signals and that are carried in the first information, to obtain the one or more pieces of ground truth information.

In another implementation, if the access network device configures, by using the first information, the time domain resource positions of the one or more reference signals that are used for measuring the ground truth information, by default, the terminal device may measure the one or more reference signals at the time domain resource positions that are of the one or more reference signals and that are carried in the first information, to obtain the one or more pieces of ground truth information.

In still another implementation, the terminal device may further obtain time domain resource positions of one or more reference signals that are used for model inference. By default, the terminal device may measure the one or more reference signals at the time domain resource positions that are of the one or more reference signals and that are carried in the first information, and measure the one or more reference signals at the time domain resource positions of the one or more reference signals that are used for model inference, to obtain the one or more pieces of ground truth information.

In still another implementation, the access network device may alternatively indicate the terminal device to measure the one or more reference signals at the time domain resource positions that are of the one or more reference signals and that are carried in the first information, to obtain the one or more pieces of ground truth information, or indicate the terminal device to measure one or more reference signals at time domain resource positions of the one or more reference signals that are used for model inference, to obtain the one or more pieces of ground truth information, where the one or more pieces of ground truth information are used for obtaining a monitoring result of performance of an AI model, and an output of the AI model is predicted information.

It can be learned that, in this embodiment, a time domain resource position of at least one piece of ground truth information in the obtained one or more pieces of ground truth information is different from a time domain resource position of the predicted information.

According to the model monitoring method provided in this embodiment of this application, the terminal device may obtain, by obtaining the time domain resource positions of the one or more reference signals that are used for measuring the ground truth information, ground truth information corresponding to a specific time domain resource position, so that performance of a prediction model can be flexibly monitored.

The foregoing solution may be used for monitoring of a CSI prediction model. In a communication system (for example, an LTE communication system or an NR communication system), a network device needs to determine, based on CSI, configurations such as a resource, an MCS, and precoding for scheduling a downlink data channel for a terminal device. It may be understood that, the CSI is channel information, and is information that can reflect a channel feature or channel quality.

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. The CSI-RS, the SSB, the DMRS, and the like may be used for measuring downlink CSI. The SRS, the DMRS, and the like may be used for measuring uplink CSI.

An FDD communication scenario is used as an example. In the FDD communication scenario, an uplink channel and a downlink channel are not reciprocal, in other words, reciprocity between the uplink channel and the downlink channel cannot be ensured. Therefore, the network device usually sends a downlink reference signal to the terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), and the like. The signal to interference plus noise ratio may also be referred to as a signal-to-interference-plus-noise ratio.

The RI indicates a quantity, recommended by the terminal device, of layers of downlink transmission. The CQI indicates a modulation and coding scheme that is determined by the terminal device and that can be supported in a current channel condition. The PMI indicates precoding recommended by the terminal device. A quantity, indicated by the PMI, of layers of the precoding corresponds to the RI.

It should be understood that, the RI, the CQI, the PMI, and the like that are indicated in the CSI report are merely recommended values of the terminal device. The network device may perform downlink transmission based on a part or all of information indicated in the CSI report. Alternatively, the network device may perform downlink transmission without referring to the information indicated in the CSI report.

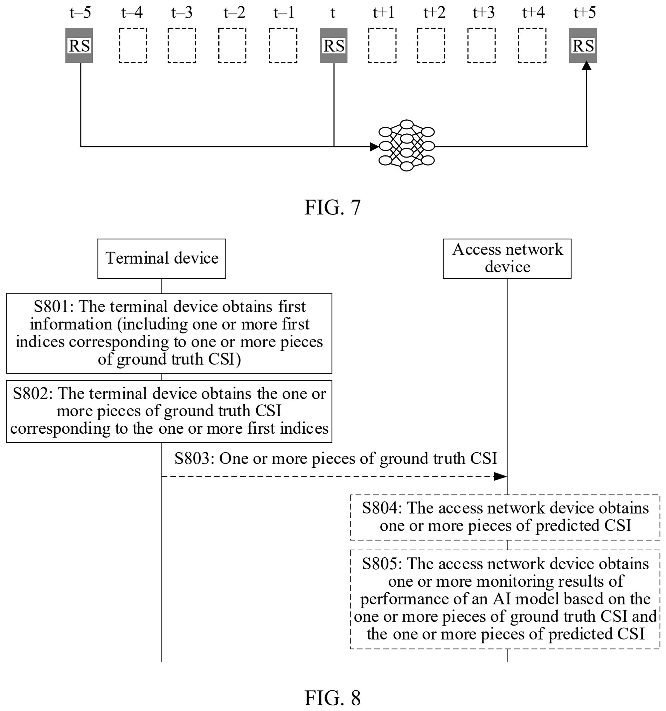

AI-based CSI prediction refers to inputting several pieces of historical/current CSI information into an AI prediction model, to output predicted future CSI. FIG. 7 is a diagram of an example of predicting CSI based on an AI model according to an embodiment of this application. Historical/current CSI information in two slots of t-5 and t may be input into the AI model, and the AI model may output CSI information at a future t+5 moment. The predicted CSI may be in any one of the following forms: a channel response, a channel matrix, a channel feature matrix, or a precoding matrix. The channel response and the channel matrix are channels, and the channel feature matrix and the precoding matrix are matrices constituted by features extracted from the channel.

Two types of CSI information are needed for computing an intermediate KPI of the AI model. One type is to-be-monitored CSI, for example, predicted CSI output by the AI model. The other type is label CSI or ground truth CSI, namely, a $\text{KPI}(H, \hat{H})$, where $H$ is the ground truth CSI, and $\hat{H}$ is the predicted CSI. The ground truth CSI means that the CSI may be considered as accurate. For example, CSI measured by the terminal device may be considered as ground truth CSI relative to predicted CSI. The $\text{KPI}(H, \hat{H})$ generally indicates a dissimilarity measure or a similarity measure between $H$ and $\hat{H}$.

As described above, for example, the KPI may be a GCS, an SGCS, an MSE, or an NMSE.

When the KPI is the GCS, the $\text{KPI}(H, \widehat{H}) = \text{GCS}(H, \widehat{H}) = \frac{1}{N}\sum_{i=1}^{N}\frac{\left\|\widehat{w}_i^{H}w_i\right\|}{\|\widehat{w}_i\|\|w_i\|}$. $\widehat{w}_i^{H}$ is predicted CSI of each resource unit, and $w_i$ is ground truth CSI of each resource unit.

When the KPI is the SGCS, the $\text{KPI}(H, \widehat{H}) = \text{SGCS}(H, \widehat{H}) = \frac{1}{N}\sum_{i=1}^{N}\left(\frac{\left\|\widehat{w}_i^{H}w_i\right\|}{\|\widehat{w}_i\|\|w_i\|}\right)^2$. $\widehat{w}_i^{H}$ is predicted CSI of each resource unit, and $w_i$ is ground truth CSI of each resource unit.

When the KPI is the MSE, the $\text{KPI}(H, \widehat{H}) = \text{MSE}(H, \widehat{H}) = \frac{1}{N}\sum_{i=1}^{N}\|w_i - \widehat{w}_i\|^2$. $\widehat{w}_i^{H}$ is predicted CSI of each resource unit, and $w_i$ is ground truth CSI of each resource unit.

When the KPI is the NMSE, the $\text{KPI}(H, \widehat{H}) = \text{NMSE}(H, \widehat{H}) = \frac{1}{N}\sum_{i=1}^{N}\frac{\|w_i - \widehat{w}_i\|^2}{\|w_i\|^2}$. $\widehat{w}_i^{H}$ is predicted CSI of each resource unit, and $w_i$ is ground truth CSI of each resource unit.

For whether the terminal device stores an AI model, how to monitor the CSI prediction model is separately described with reference to different embodiments.

FIG. 8 is a schematic flowchart of still another model monitoring method according to an embodiment of this application. In this embodiment, a terminal device does not store an AI model. For example, the method may include the following steps.

S801: The terminal device obtains first information.

In this embodiment, an index of ground truth CSI indicates the specific piece of ground truth CSI obtained by the terminal device.

The terminal device obtains the first information, where the first information includes one or more first indices corresponding to one or more pieces of ground truth CSI. For example, the terminal device may obtain the first information sent by an access network device, or may obtain the first information prestored by the terminal device.

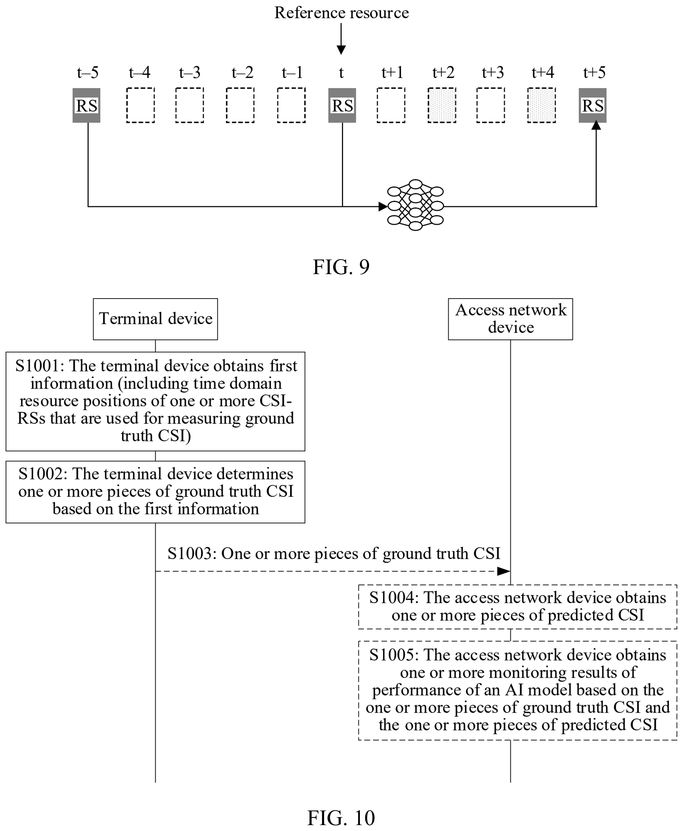

In an implementation, the terminal device may determine the index of the ground truth CSI by using a moment of a reference resource. The moment of the reference resource may be defined in a protocol or configured by the access network device. The reference resource is a time unit in time domain (where the time unit includes but is not limited to any one of the following: a symbol, a slot, a mini-slot, a subframe, and a radio frame, and the slot is used as an example for description in this embodiment of this application). As shown in FIG. 9, a reference resource is used as an example, and a slot corresponding to the reference resource is a t slot. The slot in which the reference resource is located is used as a reference. For example, an index of $n^{th}$ ground truth CSI before the slot in which the reference resource is located is -n, and an index of $n^{th}$ ground truth CSI in the slot in which the reference resource is located and after the slot in which the reference resource is located is n-1. For another example, an index of $n^{th}$ ground truth CSI in the slot in which the reference resource is located and before the slot in which the reference resource is located is -n+1, and an index of $n^{th}$ ground truth CSI after the slot in which the reference resource is located is n. For another example, an index of $K^{th}$ ground truth CSI before the slot in which the reference resource is located is 0, and an index of ground truth CSI after the slot in which the reference resource is located sequentially increases, where K is a parameter configured by the access network device or a predefined parameter. For another example, an index of $K^{th}$ ground truth CSI after the slot in which the reference resource is located is 0, and an index of ground truth CSI before the slot in which the reference resource is located sequentially increases.

The one or more first indices that correspond to the one or more pieces of ground truth CSI and that are included in the first information are indices relative to slots in which reference resources are located. For example, in the example shown in FIG. 9, the slot in which the reference resource is located is the t slot. In this case, an index of ground truth CSI in a t+2 slot is 0, and an index of ground truth CSI in a t+4 slot is 1.

The access network device sends a channel state information-reference signal (channel state information-reference signal, CSI-RS) to the terminal device, and the terminal device receives the CSI-RS and performs measurement, to obtain the ground truth CSI. A CSI-RS used for measuring the ground truth CSI (that is, used for model monitoring) and a CSI-RS used for model inference (used as an input of the model for CSI prediction) may be CSI-RSs in a same group, that is, belong to a same CSI-RS configuration. Alternatively, the CSI-RS used for measuring the ground truth CSI and the CSI-RS used for model inference may be CSI-RSs in different groups, that is, a CSI-RS is specially configured for the model monitoring.

In another implementation, the index of the ground truth CSI may alternatively be an index of the CSI-RS that is used for measuring the ground truth CSI. Still refer to FIG. 9. A time domain position of the CSI-RS that is used for measuring the ground truth CSI is further used as an example. The CSI-RS used for model inference is a CSI-RS whose periodicity is 5 ms (for example, a CSI-RS corresponding to a t-5, t, or t+5 slot); and the CSI-RS used for the model monitoring is a non-periodic or semi-static CSI-RS, and is a CSI-RS corresponding to a t+2 or t+4 slot. An index of ground truth CSI in the t+2 slot is 0, an index of ground truth CSI in the t+4 slot is 1, and an index of ground truth CSI in the t+5 slot is 2.

In still another implementation, the CSI-RS used for measuring the ground truth CSI may include only the CSI-RS used for the monitoring. For example, in the example shown in FIG. 9, the CSI reference resource is in the t slot, the index of the ground truth CSI at the t+2 moment is 0, and the index of the ground truth CSI at the t+4 moment is 1.

In still another implementation, the CSI-RS used for measuring the ground truth CSI may alternatively include the CSI-RS used for the monitoring and a CSI-RS used for predicting a moment at which the CSI is located. For example, in the example shown in FIG. 9, the index of the ground truth CSI at the t+2 moment is 0, the index of the ground truth CSI at the t+4 moment is 1, and the index of the ground truth CSI at the t+5 moment is 2.

S802: The terminal device obtains the one or more pieces of ground truth CSI corresponding to the one or more first indices.

After obtaining the one or more first indices corresponding to the one or more pieces of ground truth CSI, the terminal device measures CSI-RSs in slots that respectively correspond to the one or more indices, to obtain the one or more pieces of ground truth CSI corresponding to the one or more first indices.

The one or more pieces of ground truth CSI are used for obtaining a monitoring result of performance of the AI model, and an output of the AI model is predicted CSI.

In comparison with a conventional technology in which only a model monitoring result at a grid can be periodically obtained, in this embodiment, the terminal device may obtain, by obtaining the one or more first indices of the one or more pieces of ground truth CSI, ground truth CSI corresponding to a specific time unit, for example, a needed time unit.

Further, the method may also include the following steps (represented by dashed lines in the figure).

S803: The terminal device sends the one or more pieces of ground truth CSI to the access network device. Correspondingly, the access network device receives the one or more pieces of ground truth CSI.

In this embodiment, the terminal device does not store the AI model and cannot perform CSI prediction. Therefore, after obtaining the one or more pieces of ground truth CSI, the terminal device sends the one or more pieces of ground truth CSI to the access network device.

S804: The access network device obtains one or more pieces of predicted CSI.

The access network device stores an AI model, and may output the one or more pieces of predicted CSI by using the received one or more pieces of ground truth CSI as input information of the model.

For example, the access network device receives ground truth CSI in a t+2 slot and ground truth CSI in a t+4 slot, and the access network device may output predicted CSI in a t+5 slot by using the ground truth CSI in the t+2 slot and the ground truth CSI in the t+4 slot as input information.

S805: The access network device obtains one or more monitoring results of performance of the AI model based on the one or more pieces of ground truth CSI and the one or more pieces of predicted CSI.

The monitoring result of the performance of the AI model is a $KPI(H, \hat{H})$, where $H$ is ground truth CSI, and $\hat{H}$ is predicted CSI. In this case, for each piece of ground truth CSI, the access network device may obtain the one or more monitoring results based on the ground truth CSI and the one or more pieces of predicted CSI; or for each piece of predicted CSI, the access network device may obtain the one or more monitoring results based on the one or more pieces of ground truth CSI.

Further, to compare accuracy between the predicted CSI and the ground truth CSI, the access network device may alternatively use ground truth CSI at a T1 moment as predicted CSI at a T2 moment. For example, it is assumed that a periodicity of the CSI-RS is 5 ms, and downlink transmission is performed at a t+3 moment. In this case, if the downlink transmission is not in a monitoring stage, the CSI-RS does not exist at the t+3 moment. The access network device may use ground truth CSI at a t moment as predicted CSI at the t+3 moment, to obtain a model monitoring result at the t+3 moment: a $KPI(H_{t+3}, H_t)$.

In this case, for the problem raised in the background, performance of the model at the t+3 moment can be obtained because ground truth CSI at the t+3 moment can be obtained, so that the predicted CSI predicted by the model can reflect actual system performance, so that the predicted CSI can be used for communication.

According to the model monitoring method provided in this embodiment of this application, the terminal device may obtain, by obtaining the one or more first indices corresponding to the one or more pieces of ground truth CSI, the ground truth CSI corresponding to the specific time unit, so that performance of a prediction model can be flexibly monitored.

FIG. 10 is a schematic flowchart of another model monitoring method according to an embodiment of this application. In this embodiment, a terminal device does not store an AI model. Different from the embodiment shown in FIG. 8, in this embodiment, an index of ground truth CSI is not directly used to indicate the terminal device to obtain the specific piece of ground truth CSI, and the ground truth CSI is determined based on a time domain resource position of a CSI-RS that is used for measuring the ground truth CSI. For example, the method may include the following steps.

S1001: The terminal device obtains first information.

A CSI-RS used for measuring the ground truth CSI (that is, used for model monitoring) and a CSI-RS used for model inference (used as an input of the model for CSI prediction) may be CSI-RSs in a same group, that is, belong to a same CSI-RS configuration. Alternatively, the CSI-RS used for measuring the ground truth CSI and the CSI-RS used for model inference may be CSI-RSs in different groups, that is, a CSI-RS is specially configured for the model monitoring.

Still refer to FIG. 9. A time domain position of the CSI-RS that is used for measuring the ground truth CSI and that the CSI-RS used for model inference is a CSI-RS whose periodicity is 5 ms (for example, a CSI-RS corresponding to a t-5, t, or t+5 slot) are further used as an example. The CSI-RS used for the model monitoring is a non-periodic or semi-static CSI-RS, and is a CSI-RS corresponding to a t+2 or t+4 slot. In other words, the CSI-RS used for measuring the ground truth CSI and the CSI-RS used for model inference are CSI-RSs in different groups.

In this embodiment, the CSI-RS used for measuring the ground truth CSI and the CSI-RS used for model inference are CSI-RSs in different groups. The terminal device may determine the ground truth CSI based on the CSI-RS used for measuring the ground truth CSI. Therefore, the terminal device may obtain the first information, where the first information includes time domain resource positions of one or more CSI-RSs that are used for measuring the ground truth CSI.

For example, the terminal device may obtain the first information sent by an access network device, or may obtain the first information prestored by the terminal device.

S1002: The terminal device determines one or more pieces of ground truth CSI based on the first information.

After obtaining the first information, the terminal device determines the one or more pieces of ground truth CSI based on the first information.

In an implementation, by default, the terminal device may measure the one or more CSI-RSs at the time domain resource positions that are of the one or more CSI-RSs and that are carried in the first information, to obtain the one or more pieces of ground truth CSI. For example, in the example in FIG. 9, the terminal device may measure a CSI-RS at the t+2 moment and a CSI-RS at the t+4 moment, to separately obtain corresponding ground truth CSI.

In another implementation, if the access network device configures, by using the first information, the time domain resource positions of the one or more CSI-RSs that are used for measuring the ground truth CSI, by default, the terminal device may measure the one or more CSI-RSs at the time domain resource positions that are of the one or more CSI-RSs and that are carried in the first information, to obtain the one or more pieces of ground truth CSI. For example, in the example in FIG. 9, the terminal device may measure a CSI-RS at the t+2 moment and a CSI-RS at the t+4 moment, to separately obtain corresponding ground truth CSI.

In still another implementation, the terminal device may further obtain time domain resource positions of one or more CSI-RSs that are used for model inference. By default, the terminal device may measure the one or more CSI-RSs at the time domain resource positions that are of the one or more CSI-RSs and that are carried in the first information, and measure the one or more CSI-RSs at the time domain resource positions of the one or more CSI-RSs that are used for model inference, to obtain the one or more pieces of ground truth CSI. For example, in the example in FIG. 9, the terminal device may measure a CSI-RS at the t+2 moment, a CSI-RS at the t+4 moment, and a CSI-RS at the t+5 moment, to separately obtain corresponding ground truth CSI.

In still another implementation, the access network device may alternatively indicate the terminal device to measure the one or more CSI-RSs at the time domain resource positions that are of the one or more CSI-RSs and that are carried in the first information, to obtain the one or more pieces of ground truth CSI, or indicate the terminal device to measure one or more CSI-RSs at time domain resource positions of the one or more CSI-RSs that are used for model inference, to obtain the one or more pieces of ground truth CSI.

The one or more pieces of ground truth CSI are used for obtaining a monitoring result of performance of the AI model, and an output of the AI model is predicted CSI.

It can be learned that, in this embodiment, a time domain resource position of at least one piece of ground truth CSI in the one or more pieces of ground truth CSI that are obtained in the foregoing implementation is different from a time domain resource position of the predicted CSI.

Further, the method may also include the following steps (represented by dashed lines in the figure).

S1003: The terminal device sends the one or more pieces of ground truth CSI to the access network device. Correspondingly, the access network device receives the one or more pieces of ground truth CSI.

For a specific implementation of this step, refer to step S803 in the embodiment shown in FIG. 8. Details are not described herein again.

S1004: The access network device obtains one or more pieces of predicted CSI, where the one or more pieces of predicted CSI are the output of the AI model.

For a specific implementation of this step, refer to step S804 in the embodiment shown in FIG. 8. Details are not described herein again.

S1005: The access network device obtains one or more monitoring results of the performance of the AI model based on the received one or more pieces of ground truth CSI and the received one or more pieces of predicted CSI.

For a specific implementation of this step, refer to step S805 in the embodiment shown in FIG. 8. Details are not described herein again.

According to the model monitoring method provided in this embodiment of this application, the terminal device may obtain, by obtaining the time domain resource positions of the one or more CSI-RSs that are used for measuring the ground truth CSI, ground truth CSI corresponding to a specific time domain resource position, so that performance of a prediction model can be flexibly monitored.

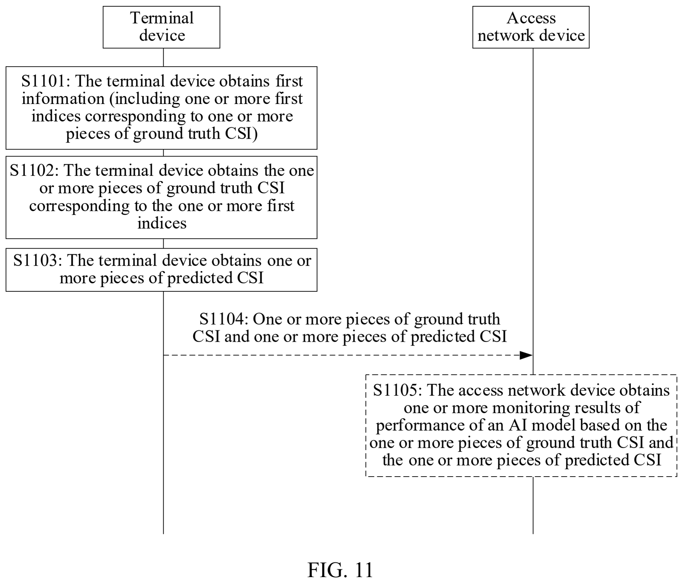

FIG. 11 is a schematic flowchart of still another model monitoring method according to an embodiment of this application. Different from embodiments shown in FIG. 8 and FIG. 10, in this embodiment, a terminal device stores an AI model that can predict CSI. For example, the method may include the following steps.

S1101: The terminal device obtains first information, where the first information includes one or more first indices of one or more pieces of ground truth CSI.

For a specific implementation of this step, refer to step S801 in the embodiment shown in FIG. 8. Details are not described herein again.

S1102: The terminal device obtains the one or more pieces of ground truth CSI corresponding to the one or more first indices.

For a specific implementation of this step, refer to step S802 in the embodiment shown in FIG. 8. Details are not described herein again.

S1103: The terminal device obtains one or more pieces of predicted CSI.

A sequence of step S1101, step S1102, and step S1103 is not limited in this embodiment. Step S1101 and step S1102 may be performed first, and then step S1103 is performed; step S1101, step S1102, and step S1103 may be simultaneously performed; or step S1103 may be performed first, and then step S1101 and step S1102 are performed.

In this embodiment, an access network device may indicate the terminal device to obtain predicted CSI at specific moments, and the terminal device obtains the one or more pieces of predicted CSI based on an indication of the access network device.

Specifically, the access network device may send second information to the terminal device, and the terminal device obtains the one or more pieces of predicted CSI based on the second information.

In an implementation, the second information includes one or more second indices of the one or more pieces of predicted CSI. The one or more second indices are based on a time unit corresponding to a reference resource. A moment of the reference resource is defined in a protocol. The reference resource is a time unit in time domain (where the time unit includes but is not limited to any one of the following: a symbol, a slot, a mini-slot, a subframe, and a radio frame, and the slot is used as an example for description in this embodiment of this application).

The time unit corresponding to the reference resource is any one of the following:

a first time unit in which a resource for reporting a monitoring result report is located;
a second time unit in which downlink control signaling (downlink control information, DCI) for scheduling model monitoring is located;
a third time unit determined based on the first time unit or the second time unit; or
a predefined/preconfigured fourth time unit.

In some embodiments of this application, after obtaining the predicted CSI, the terminal device may generate a monitoring result report of the AI model, and report the monitoring result report to the access network device in the first time unit. In this case, the time unit corresponding to the reference resource may be the first time unit in which the resource for reporting the monitoring result report is located. For example, a slot corresponding to the reference resource is a slot in which an $A^{th}$ CSI-RS is located and that is before or after a slot in which the resource for reporting the monitoring result report is located, where A is a parameter configured by the access network device or a predefined parameter. For example, A = 1.

In some embodiments of this application, the access network device may schedule the terminal device to perform model monitoring. Specifically, the access network device sends DCI to the terminal device in a second time unit, where the DCI indicates the terminal device to perform model monitoring. In this case, the time unit corresponding to the reference resource may be the second time unit in which the DCI for scheduling the model monitoring is located.

Alternatively, the time unit corresponding to the reference resource may be the third time unit determined based on the first time unit or the second time unit. For example, T is the first time unit or the second time unit, and the third time unit is T + $\Delta t$, where $\Delta t$ may be a parameter configured by the access network device or a predefined parameter.

After the time unit corresponding to the reference resource is determined, in this implementation, the one or more second indices of the one or more pieces of predicted CSI are based on the time unit corresponding to the reference resource. For example, an index of $n^{th}$ predicted CSI before the slot in which the reference resource is located is -n, and an index of $n^{th}$ predicted CSI in the slot in which the reference resource is located and after the slot in which the reference resource is located is n-1. For another example, an index of $n^{th}$ predicted CSI in the slot in which the reference resource is located and before the slot in which the reference resource is located is -n+1, and an index of $n^{th}$ predicted CSI after the slot in which the reference resource is located is n. For another example, an index of $K^{th}$ predicted CSI before the slot in which the reference resource is located is 0, and an index of predicted CSI after the slot in which the reference resource is located sequentially increases, where K is a parameter configured by the access network device or a predefined parameter. For another example, an index of $K^{th}$ predicted CSI after the slot in which the CSI reference resource is located is 0, and an index of predicted CSI before the slot in which the CSI reference resource is located sequentially increases.

In another implementation, the second information includes a relative time unit value, relative to the time unit corresponding to the reference resource, of each of the one or more pieces of predicted CSI. In other words, the predicted CSI may alternatively be indicated by using the relative time unit value, relative to the time unit corresponding to the reference resource, of the predicted CSI. For example, 0 indicates the slot in which the reference resource is located, -n indicates an $n^{th}$ slot before the slot in which the reference resource is located, and n indicates an $n^{th}$ slot after the slot in which the CSI reference resource is located.

After receiving the second information, the terminal device may generate the one or more pieces of predicted CSI based on an implementation of the AI model of the terminal device. For example, as shown in FIG. 9, the slot in which the reference resource is located is t, the second index included in the second information is 1, and a CSI-RS used for model inference is a CSI-RS whose periodicity is 5 ms. Therefore, the second information indicates to obtain predicted CSI in the t+5 slot. Based on the implementation of the AI model of the terminal device, the terminal device may obtain predicted CSI in the t+5 slot by using CSI obtained through actual measurement in the t-5 slot and the t slot as input information of the model.

Further, the method may also include the following steps (represented by dashed lines in the figure).

S1104: The terminal device sends the one or more pieces of ground truth CSI and the one or more pieces of predicted CSI to the access network device. Correspondingly, the access network device receives the one or more pieces of ground truth CSI and the one or more pieces of predicted CSI.

The terminal device obtains the one or more pieces of ground truth CSI and the one or more pieces of predicted CSI, and the terminal device may send the one or more ground truth CSI and the one or more pieces of predicted CSI to the access network device.

S1105: The access network device obtains one or more monitoring results of performance of the AI model based on the one or more pieces of ground truth CSI and the one or more pieces of predicted CSI.

For a specific implementation of this step, refer to step S805 in the embodiment shown in FIG. 8. Details are not described herein again.

According to the model monitoring method provided in this embodiment of this application, the terminal device may obtain, by obtaining the one or more first indices corresponding to the one or more pieces of ground truth CSI, ground truth CSI corresponding to a specific time unit, and obtain corresponding predicted CSI based on an indication of the access network device, so that the access network device can obtain a model monitoring result of an actual system, so that performance of a prediction model can be flexibly monitored, and prediction performance can reflect actual system performance.

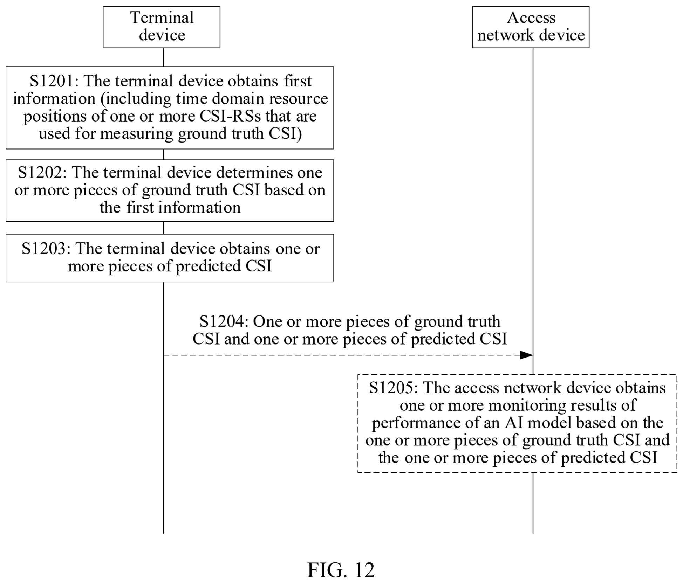

FIG. 12 is a schematic flowchart of still another model monitoring method according to an embodiment of this application. In this embodiment, a terminal device stores an AI model that can predict CSI. Different from the embodiment shown in FIG. 11, in this embodiment, ground truth CSI is determined based on a time domain resource position of a CSI-RS that is used for measuring the ground truth CSI. For example, the method may include the following steps.

S1201: The terminal device obtains first information, where the first information includes time domain resource positions of one or more CSI-RSs that are used for measuring ground truth CSI.

For a specific implementation of this step, refer to step S1001 in the embodiment shown in FIG. 10. Details are not described herein again.

S1202: The terminal device determines one or more pieces of ground truth CSI based on the first information.

For a specific implementation of this step, refer to step S1002 in the embodiment shown in FIG. 10. Details are not described herein again.

S1203: The terminal device obtains one or more pieces of predicted CSI.

For a specific implementation of this step, refer to step S1103 in the embodiment shown in FIG. 11. Details are not described herein again.

S1204: The terminal device sends the one or more pieces of ground truth CSI and the one or more pieces of predicted CSI to an access network device. Correspondingly, the access network device receives the one or more pieces of ground truth CSI and the one or more pieces of predicted CSI.

For a specific implementation of this step, refer to step S1104 in the embodiment shown in FIG. 11. Details are not described herein again.

A sequence of step S1201, step S1202, and step S1203 is not limited in this embodiment. Step S1201 and step S1202 may be performed first, and then step S1203 is performed; step S1201, step S1202, and step S1203 may be simultaneously performed; or step S1203 may be performed first, and then step S1201 and step S1202 are performed.

S1205: The access network device obtains one or more monitoring results of performance of the AI model based on the one or more pieces of ground truth CSI and the one or more pieces of predicted CSI.

For a specific implementation of this step, refer to step S805 in the embodiment shown in FIG. 8. Details are not described herein again.

According to the model monitoring method provided in this embodiment of this application, the terminal device may obtain, by obtaining the time domain resource positions of the one or more CSI-RSs that are used for measuring the ground truth CSI, ground truth CSI corresponding to a specific time domain resource position, and obtain corresponding predicted CSI based on an indication of the access network device, so that the access network device can obtain a model monitoring result of an actual system, so that performance of a prediction model can be flexibly monitored, and prediction performance can reflect actual system performance.

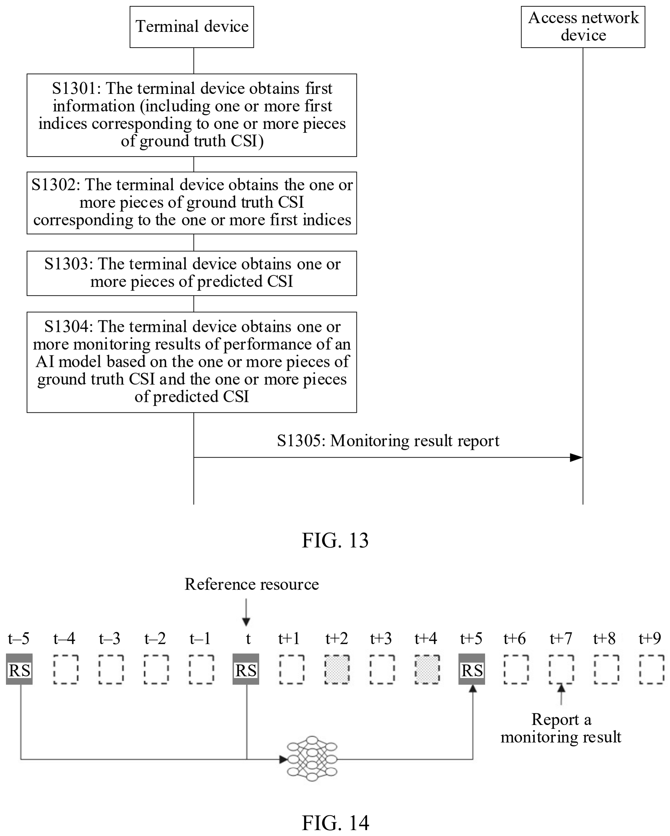

FIG. 13 is a schematic flowchart of still another model monitoring method according to an embodiment of this application. Different from the foregoing embodiments, in this embodiment, a terminal device stores an AI model that can predict CSI, and the terminal device may further obtain a monitoring result. For example, the method may include the following steps.

S1301: The terminal device obtains first information, where the first information includes one or more first indices of one or more pieces of ground truth CSI.

For a specific implementation of this step, refer to step S801 in the embodiment shown in FIG. 8. Details are not described herein again.

S1302: The terminal device obtains the one or more pieces of ground truth CSI corresponding to the one or more first indices.

For a specific implementation of this step, refer to step S802 in the embodiment shown in FIG. 8. Details are not described herein again.

S1303: The terminal device obtains one or more pieces of predicted CSI.

For a specific implementation of this step, refer to step S1103 in the embodiment shown in FIG. 11. Details are not described herein again.

A sequence of step S1301, step S1302, and step S1303 is not limited in this embodiment. Step S1301 and step S1302 may be performed first, and then step S1303 is performed; step S1301, step S1302, and step S1303 may be simultaneously performed; or step S1303 may be performed first, and then step S1301 and step S1302 are performed.

S1304: The terminal device obtains one or more monitoring results of performance of the AI model based on the one or more pieces of ground truth CSI and the one or more pieces of predicted CSI.

After obtaining the one or more pieces of ground truth CSI and the one or more pieces of predicted CSI, for each piece of ground truth CSI, the terminal device may obtain the one or more monitoring results based on the pieces of ground truth CSI and the one or more pieces of predicted CSI; or for each piece of predicted CSI, may obtain the one or more monitoring results based on the one or more pieces of ground truth CSI.

For example, the terminal device obtains two pieces of predicted CSI, which are respectively $\hat{H}_t$ and $\hat{H}_{t+5}$, and two pieces of ground truth CSI, which are respectively $H_{t+2}$ and $H_{t+4}$. In this case, the terminal device may obtain four KPIs through computation, which are respectively a KPI($H_{t+2}$, $\hat{H}_t$), a KPI($H_{t+2}$, $\hat{H}_{t+5}$), a KPI($H_{t+4}$, $\hat{H}_t$), and a KPI($H_{t+4}$, $\hat{H}_{t+5}$).

Further, an access network device may alternatively indicate a case that each monitoring result is obtained through computation by using a specific piece of predicted CSI and a specific piece of ground truth CSI.

S1305: The terminal device sends a monitoring result report to the access network device.

After obtaining the one or more monitoring results, the terminal device may send the monitoring result report to the network device.

An implementation in which the terminal device sends the monitoring result report includes but is not limited to the following.

In an implementation, the monitoring result report includes the one or more monitoring results. In this implementation, the terminal device may report all obtained monitoring results to the access network device, so that the access network device can obtain a complete monitoring result. For example, in the foregoing example, the terminal device may report the foregoing four KPIs.

During specific reporting, the terminal device may report the one or more monitoring results to the access network device in a preset order. For example, if the monitoring results are KPI results, for a plurality of pieces of predicted CSI and/or a plurality of pieces of ground truth CSI, reporting may be performed in an order indicated by the access network device or a chronological order of the monitoring results, and for the predicted CSI and the ground truth CSI, reporting may be performed first in an order of the predicted CSI and then in an order of the ground truth CSI, or first in the order of the ground truth CSI and then in the order of the predicted CSI. For example, four KPIs are the KPI($H_{t+2}$, $\hat{H}_t$), the KPI($H_{t+2}$, $\hat{H}_{t+5}$) the KPI($H_{t+4}$, $\hat{H}_t$), and the KPI($H_{t+4}$, $\hat{H}_{t+5}$). An order of the four KPIs is the KPI($H_{t+2}$, $\hat{H}_t$), the KPI($H_{t+4}$, $\hat{H}_t$), the KPI($H_{t+2}$, $\hat{H}_{t+5}$), and the KPI($H_{t+4}$, $\hat{H}_{t+5}$), in a chronological order and in an order of the ground truth CSI first and then an order of to-be-monitored CSI.

In another implementation, in some scenarios, the access network device may know only whether there is a monitoring result indicating that the performance of the model is good, and does not need to obtain all the monitoring results. Therefore, the monitoring result report includes at least one monitoring result that is greater than or equal to a first threshold in the one or more monitoring results. The first threshold may be configured by the access network device or predefined. For example, in the foregoing example, the terminal device may report one or more of KPIs that are greater than or equal to the first threshold and that are in the four KPIs. In this implementation, signaling overheads can be reduced.

In still another implementation, in some scenarios, the access network device may know only whether there is a monitoring result indicating that the performance of the model is poor, and does not need to obtain all the monitoring results. Therefore, the monitoring result report may include at least one monitoring result that is less than or equal to a second threshold in the one or more monitoring results. The second threshold may be configured by the access network device or predefined, and the second threshold is less than the first threshold. For example, in the foregoing example, the terminal device may report one or more KPIs that are less than or equal to the second threshold and that are in the four KPIs. In this implementation, signaling overheads can be reduced.

In still another implementation, in some scenarios, the access network device may know only whether there is a monitoring result indicating that the performance of the model is good, and does not need to obtain all the monitoring results. Therefore, the monitoring result report may include an index of predicted CSI and an index of ground truth CSI that correspond to an optimal monitoring result in the one or more monitoring results. The access network device may have pre-received the one or more pieces of predicted CSI and the one or more pieces of ground truth CSI. In this case, the access network device may obtain the optimal monitoring result based on the index of the predicted CSI and the index of the ground truth CSI that correspond to the optimal monitoring result. In this implementation, signaling overheads can be reduced, and a requirement on a computing capability of the terminal device is low.

Alternatively, as described above, the access network device indicates, by using the first message, the indices of the one or more pieces of predicted CSI that are used for computing the monitoring result, a same indication method as that of the access network device may be used, and the monitoring result report may include a sequence number that is of the predicted CSI corresponding to the optimal monitoring result in the one or more monitoring results and that is in an order that is of the one or more pieces of predicted CSI and that is indicated by the access network device. In addition, as described above, the access network device further indicates the indices of the one or more pieces of ground truth CSI that are used for computing the monitoring result, a same indication method as that of the access network device may be used, and the monitoring result report may include a sequence number that is of the ground truth CSI corresponding to the optimal monitoring result in the one or more monitoring results and that is in an order that is of the one or more pieces of ground truth CSI and that is indicated by the access network device.

In still another implementation, in some scenarios, the access network device may know only whether there is a monitoring result indicating that the performance of the model is poor, and does not need to obtain all the monitoring results. Therefore, the monitoring result report may include an index of predicted CSI and an index of ground truth CSI that correspond to a worst monitoring result in the one or more monitoring results. The access network device may have pre-received the one or more pieces of predicted CSI and the one or more pieces of ground truth CSI. In this case, the access network device may obtain the worst monitoring result based on the index of the predicted CSI and the index of the ground truth CSI that correspond to the worst monitoring result. In this implementation, signaling overheads can be reduced, and a requirement on a computing capability of the terminal device is low.

Alternatively, as described above, the access network device indicates, by using the first message, the indices of the one or more pieces of predicted CSI that are used for computing the monitoring result, a same indication method as that of the access network device may be used, and the monitoring result report may include a sequence number that is of the predicted CSI corresponding to the worst monitoring result in the one or more monitoring results and that is in an order that is of the one or more pieces of predicted CSI and that is indicated by the access network device. In addition, as described above, the access network device further indicates the indices of the one or more pieces of ground truth CSI that are used for computing the monitoring result, a same indication method as that of the access network device may be used, and the monitoring result report may include a sequence number that is of the ground truth CSI corresponding to the worst monitoring result in the one or more monitoring results and that is in an order that is of the one or more pieces of ground truth CSI and that is indicated by the access network device.

In still another implementation, a differential reporting manner may be used. The monitoring result report includes an absolute value of a first monitoring result in a plurality of monitoring results, and a relative value, relative to the first monitoring result, of a monitoring result other than the first monitoring result in the plurality of monitoring results. For example, four to-be-reported KPIs are the $KPI(H_{t+2}, \hat{H}_t)$, the $KPI(H_{t+2}, \hat{H}_{t+5})$, the $KPI(H_{t+4}, \hat{H}_t)$, and the $KPI(H_{t+4}, \hat{H}_{t+5})$, and a reporting amount is the $KPI(H_{t+2}, \hat{H}_t)$, a $\Delta KPI\ 1$, a $\Delta KPI\ 2$, and a $\Delta KPI\ 3$, where the $\Delta KPI\ 1$ = the $KPI(H_{t+2}, \hat{H}_{t+5})$ - the $KPI(H_{t+2}, \hat{H}_t)$, the $\Delta KPI\ 2$ = the $KPI(H_{t+4}, \hat{H}_t)$ - the $KPI(H_{t+2}, \hat{H}_t)$, and the $\Delta KPI\ 3$ = $KPI(H_{t+4}, \hat{H}_{t+5})$ - the $KPI(H_{t+2}, \hat{H}_t)$. In this implementation, signaling overheads can be reduced.

Further, the first monitoring result may be determined based on an order of the ground truth CSI used and/or an order of the predicted CSI used during obtaining of the plurality of monitoring results. As described above, for each piece of ground truth CSI, the terminal device may obtain the one or more monitoring results based on the ground truth CSI and the one or more pieces of predicted CSI, and for each piece of ground truth CSI, the access network device indicates the indices of the one or more pieces of ground truth CSI that are used for computing the monitoring result; or for each piece of predicted CSI, the terminal device may obtain the one or more monitoring results based on the one or more pieces of ground truth CSI, and for each piece of predicted CSI, the access network device indicates, by using the first message, the indices of the one or more pieces of predicted CSI that are used for computing the monitoring result. Therefore, a generation order of the one or more monitoring results may be determined based on an order of the ground truth CSI used and/or an order of the predicted CSI used during generation of the monitoring result by the terminal device, so that the first monitoring result may be determined based on the generation order. For example, the first monitoring result may be a 1st monitoring result or a last monitoring result in the one or more monitoring results that are sequentially generated.

In still another implementation, the access network device may alternatively indicate the terminal device to report a part of monitoring results. For example, the terminal device may be indicated, in a bitmap manner, to report a part of KPI results in the foregoing four KPI results.

Further, the monitoring result report and CSI feedback may be reported in a same CSI report, or the monitoring result report and the CSI feedback may be reported in different CSI reports, where the CSI feedback is a measurement result used for reporting a CSI-RS.

If the monitoring result and the CSI feedback are reported in the same CSI report, that reporting is performed in a specific CSI report used for the CSI feedback may be configured by the access network device or predefined. For example, it is predefined that reporting is performed in a first CSI report after a last CSI-RS used for measuring the ground truth CSI, or reporting is performed in a first CSI report after T1 time following the last CSI-RS used for measuring the ground truth CSI. T1 is time reserved for the terminal device to compute the KPI, and may be configured by the access network device or predefined. T1 may be related to a processing capability of the terminal device. It should be noted that, if the monitoring result report and the CSI feedback may be reported in the same CSI report, predicted CSI reported in the CSI report and to-be-monitored predicted CSI corresponding to the monitoring result report are not same CSI. FIG. 14 is a diagram of an example of reporting a monitoring result report according to an embodiment of this application. The CSI report is reported at a t+7 moment, and predicted CSI reported in the CSI report at the t+7 moment is predicted CSI at a t+10 moment and is predicted by using ground truth CSI at a t+5 moment and ground truth CSI before the t+5 moment, while to-be-monitored predicted CSI corresponding to the monitoring result report in the CSI report is predicted CSI at the t+5 moment and is predicted by using ground truth CSI at a t moment and ground truth CSI before the t moment.

If the monitoring result report is reported independently of the CSI feedback, a resource for reporting the monitoring result report is configured by the access network device. In addition, the terminal device does not expect the reporting resource to be earlier than the last CSI-RS that is used for measuring the ground truth CSI and that corresponds to the monitoring result report, or the terminal device does not expect the reporting resource to be earlier than T2 time following the last CSI-RS that is used for measuring the ground truth CSI and that corresponds to the monitoring result report. T2 is time reserved for the terminal device to compute the KPI, and may be configured by the access device or predefined. T2 may be related to the processing capability of the terminal device.

According to the model monitoring method provided in this embodiment of this application, the terminal device may obtain, by obtaining the one or more first indices corresponding to the one or more pieces of ground truth CSI, ground truth CSI corresponding to a specific time unit, obtain corresponding predicted CSI based on an indication of the access network device, and obtain the model monitoring result based on the obtained ground truth CSI and the obtained predicted CSI, so that the access network device can obtain a model monitoring result of an actual system, so that performance of a prediction model can be flexibly monitored, and prediction performance can reflect actual system performance.

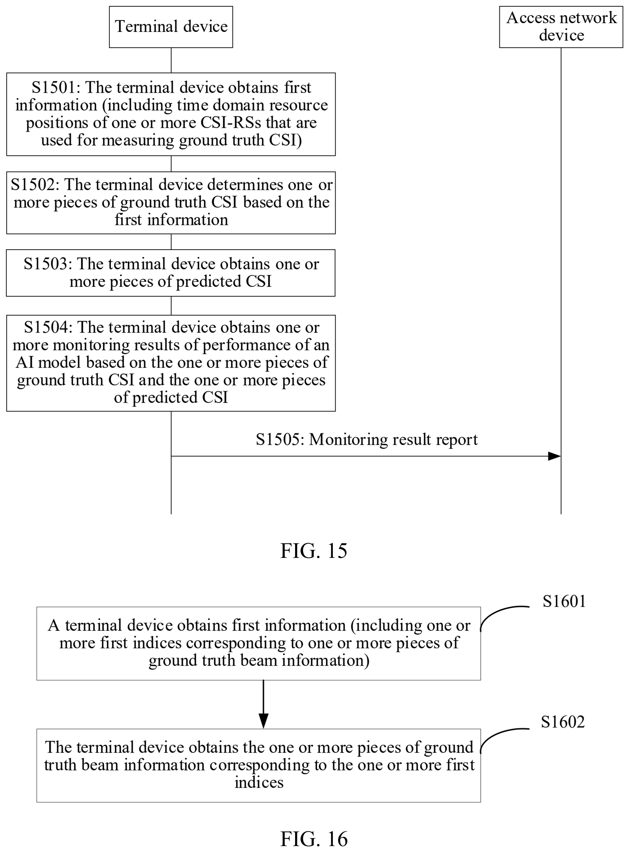

FIG. 15 is a schematic flowchart of still another model monitoring method according to an embodiment of this application. Different from embodiments shown in FIG. 8 and FIG. 10, in this embodiment, a terminal device stores an AI model that can predict CSI, and the terminal device may further obtain a monitoring result. Different from the embodiment shown in FIG. 13, in this embodiment, ground truth CSI is determined based on a time domain resource position of a CSI-RS that is used for measuring the ground truth CSI. For example, the method may include the following steps.

S1501: The terminal device obtains first information, where

the first information includes time domain resource positions of one or more CSI-RSs that are used for measuring ground truth CSI.

For a specific implementation of this step, refer to step S1001 in the embodiment shown in FIG. 10. Details are not described herein again.

S1502: The terminal device determines one or more pieces of ground truth CSI based on the first information.

For a specific implementation of this step, refer to step S1002 in the embodiment shown in FIG. 10. Details are not described herein again.

S1503: The terminal device obtains one or more pieces of predicted CSI.

For a specific implementation of this step, refer to step S1103 in the embodiment shown in FIG. 11. Details are not described herein again.

S1504: The terminal device obtains one or more monitoring results of performance of the AI model based on the one or more pieces of ground truth CSI and the one or more pieces of predicted CSI.

For a specific implementation of this step, refer to step S1304 in the embodiment shown in FIG. 13. Details are not described herein again.

S1505: The terminal device sends a monitoring result report to an access network device.

For a specific implementation of this step, refer to step S1305 in the embodiment shown in FIG. 13. Details are not described herein again.

According to the model monitoring method provided in this embodiment of this application, the terminal device may obtain, by obtaining the time domain resource positions of the one or more CSI-RSs that are used for measuring the ground truth CSI, ground truth CSI corresponding to a specific time domain resource position, obtain corresponding predicted CSI based on an indication of the access network device, and obtain the model monitoring result based on the obtained ground truth CSI and the obtained predicted CSI, so that the access network device can obtain a model monitoring result of an actual system, so that performance of a prediction model can be flexibly monitored, and prediction performance can reflect actual system performance.

The solution described in the foregoing embodiment may also be applied to a beam prediction scenario.

Beam prediction is to predict an optimal beam in the future based on a historical/current beam measurement result.

A KPI for beam prediction may be Top-1 accuracy, Top 1 accuracy with an ndB margin, Top-K accuracy, a reference signal received power (reference signal received power, RSRP) difference, or the like.

The Top-1 accuracy refers to whether a predicted optimal beam is an actual optimal beam, or a proportion of an actual optimal beam in optimal beams predicted in a plurality of times of monitoring.

The Top 1 accuracy with the ndB margin refers to whether a difference between RSRP of a predicted optimal beam and RSRP of an actual optimal beam is less than ndB, or a proportion of a predicted optimal beam that is in optimal beams predicted in a plurality of times of monitoring and whose RSRP has a difference less than ndB from RSRP of an actual optimal beam.

The Top-K accuracy refers to whether a predicted optimal beam is in actually optimal K beams, or in actually optimal K beams, a proportion of optimal beams predicted in a plurality of times of monitoring, or whether an actual optimal beam is in predicted K optimal beams, or in a plurality of times of monitoring, a proportion of an actual optimal beam in predicted K optimal beams.

An RSRP difference is a difference between RSRP of a predicted optimal beam and RSRP of an actual optimal beam, or a difference between RSRP of a predicted optimal beam and actual RSRP of the beam.

FIG. 16 is a schematic flowchart of still another model monitoring method according to an embodiment of this application. For example, the method may include the following steps.

S1601: A terminal device obtains first information.

Similar to CSI prediction, two types of information are also needed for computing a KPI of beam prediction. One type is predicted information, for example, one or more of an index or RSRP of a predicted optimal beam. The other type is ground truth information, for example, one or more of an index or RSRP of an actual optimal beam. Alternatively, an access network device may indicate the terminal device to use specific predicted information and ground truth information to compute the KPI.

In this embodiment, an index of ground truth beam information indicates the specific piece of ground truth beam information obtained by the terminal device.

The terminal device obtains the first information, where the first information includes one or more first indices corresponding to one or more pieces of ground truth beam information. For example, the terminal device may obtain the first information sent by the access network device, or may obtain the first information prestored by the terminal device.

For a specific implementation of this step, refer to a specific implementation of obtaining the first information in CSI prediction in the embodiment shown in FIG. 8. Details are not described herein again.

S1602: The terminal device obtains the one or more pieces of ground truth beam information corresponding to the one or more first indices.

After obtaining the one or more first indices corresponding to the one or more pieces of ground truth beam information, the terminal device measures reference signals, for example, CSI-RSs, respectively corresponding to the one or more indices, to obtain the one or more pieces of ground truth beam information corresponding to the one or more first indices.

The one or more pieces of ground truth beam information are used for obtaining a monitoring result of performance of an AI model, and an output of the AI model is predicted beam information.

In comparison with a conventional technology in which only a model monitoring result at a grid can be periodically obtained, in this embodiment, the terminal device may obtain, by obtaining the one or more first indices of the one or more pieces of ground truth beam information, ground truth beam information corresponding to a specific time unit, for example, a needed time unit.

Further, the terminal device may send the one or more pieces of ground truth beam information to the access network device. The access network device obtains one or more pieces of predicted beam information, and obtains one or more monitoring results of the performance of the AI model based on the one or more pieces of ground truth beam information and the one or more pieces of predicted beam information.

Alternatively, the terminal device may further obtain one or more pieces of predicted beam information, and send the one or more pieces of ground truth beam information and the one or more pieces of predicted beam information to the access network device. In addition, the access network device obtains one or more monitoring results of the performance of the AI model based on the one or more pieces of ground truth beam information and the one or more pieces of predicted beam information.

According to the model monitoring method provided in this embodiment of this application, the terminal device may obtain, by obtaining the one or more first indices corresponding to the one or more pieces of ground truth beam information, the ground truth beam information corresponding to the specific time unit, so that performance of a prediction model can be flexibly monitored.

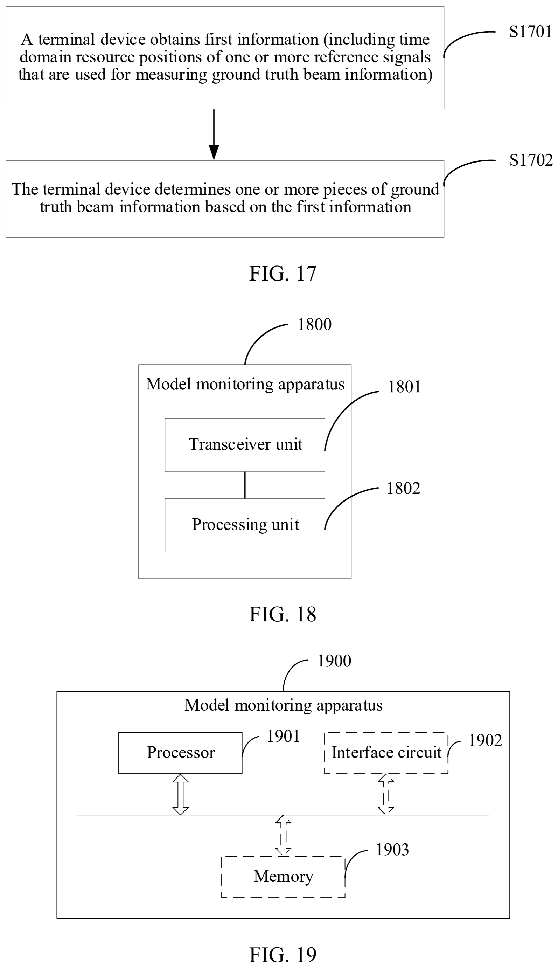

FIG. 17 is a schematic flowchart of still another model monitoring method according to an embodiment of this application. Different from the embodiment shown in FIG. 16, in this embodiment, an index of ground truth beam information is not directly used to indicate a terminal device to obtain the specific piece of ground truth beam information, and the ground truth beam information is determined based on a time domain resource position of a reference signal that is used for measuring the ground truth beam information. For example, the method may include the following steps.

S1701: The terminal device obtains first information.

The reference signal used for measuring the ground truth beam information (that is, used for model monitoring) and a reference signal used for model inference (used as an input of a model for beam information prediction) may be reference signals in a same group, that is, belong to a same reference signal configuration. Alternatively, the reference signal used for measuring the ground truth beam information and the reference signal used for model inference may be reference signals in different groups, that is, a reference signal is specially configured for the model monitoring.

In this embodiment, the reference signal used for measuring the ground truth beam information and the reference signal used for model inference are reference signals in different groups. The terminal device may determine the ground truth beam information based on the reference signal used for measuring the ground truth beam information. Therefore, the terminal device may obtain the first information, where the first information includes time domain resource positions of one or more reference signals that are used for measuring the ground truth beam information.

For example, the terminal device may obtain the first information sent by an access network device, or may obtain the first information prestored by the terminal device.

For a specific implementation of this step, refer to a specific implementation of obtaining the first information in CSI prediction in the embodiment shown in FIG. 10. Details are not described herein again.

S1702: The terminal device determines one or more pieces of ground truth beam information based on the first information.

After obtaining the first information, the terminal device may determine the one or more pieces of ground truth beam information based on the first information.

In an implementation, by default, the terminal device may measure the one or more reference signals at the time domain resource positions that are of the one or more reference signals and that are carried in the first information, to obtain the one or more pieces of ground truth beam information.

In another implementation, if the access network device configures, by using the first information, the time domain resource positions of the one or more reference signals that are used for measuring the ground truth beam information, by default, the terminal device may measure the one or more reference signals at the time domain resource positions that are of the one or more reference signals and that are carried in the first information, to obtain the one or more pieces of ground truth beam information.

In still another implementation, the terminal device may further obtain time domain resource positions of one or more reference signals that are used for model inference. By default, the terminal device may measure the one or more reference signals at the time domain resource positions that are of the one or more reference signals and that are carried in the first information, and measure the one or more reference signals at the time domain resource positions of the one or more reference signals that are used for model inference, to obtain the one or more pieces of ground truth beam information.

In still another implementation, the access network device may alternatively indicate the terminal device to measure the one or more reference signals at the time domain resource positions that are of the one or more reference signals and that are carried in the first information, to obtain the one or more pieces of ground truth beam information, or indicate the terminal device to measure one or more reference signals at time domain resource positions of the one or more reference signals that are used for model inference, to obtain the one or more pieces of ground truth beam information.

The one or more pieces of ground truth beam information are used for obtaining a monitoring result of performance of an AI model, and an output of the AI model is predicted beam information.

It can be learned that, in this embodiment, a time domain resource position of at least one piece of ground truth beam information in the obtained one or more pieces of ground truth beam information is different from a time domain resource position of the predicted beam information.

Further, the terminal device may send the one or more pieces of ground truth beam information to the access network device. The access network device obtains one or more pieces of predicted beam information, and obtains one or more monitoring results of the performance of the AI model based on the one or more pieces of ground truth beam information and the one or more pieces of predicted beam information.

Alternatively, the terminal device may further obtain one or more pieces of predicted beam information, and send the one or more pieces of ground truth beam information and the one or more pieces of predicted beam information to the access network device. In addition, the access network device obtains one or more monitoring results of the performance of the AI model based on the one or more pieces of ground truth beam information and the one or more pieces of predicted beam information.

According to the model monitoring method provided in this embodiment of this application, the terminal device may obtain, by obtaining the time domain resource positions of the one or more reference signals that are used for measuring the ground truth beam information, ground truth beam information corresponding to a specific time domain resource position, so that performance of a prediction model can be flexibly monitored.

It may be understood that, in the foregoing embodiments, the method and/or steps implemented by the access network device may alternatively be implemented by a component (for example, a chip or a circuit) that is used in the access network device, and the method and/or steps implemented by the terminal device may alternatively be implemented by a component (for example, a chip or a circuit) that is used in the terminal device.

The foregoing mainly describes the solutions provided in embodiments of this application from a perspective of interaction between network elements. Correspondingly, embodiments of this application further provide a model monitoring apparatus, and the model monitoring apparatus is configured to implement the foregoing methods. The model monitoring apparatus may be the access network device in the foregoing method embodiments or a component that can be used in the access network device; or the model monitoring apparatus may be the terminal device in the foregoing method embodiments or a component that can be used in the terminal device. It may be understood that, to implement the foregoing functions, the model monitoring apparatus includes a corresponding hardware structure and/or a corresponding software module for performing each function. A person skilled in the art should be easily aware that, in combination with units and algorithm steps of examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application. However, it should not be considered that the implementation goes beyond the scope of this application.

In embodiments of this application, the model monitoring apparatus may be divided into functional modules based on the foregoing method embodiments. For example, each functional module may be divided based on each corresponding function, or two or more functions may be integrated into one processing unit. The integrated module may be implemented in a form of hardware, or may be implemented in a form of a software functional module. It should be noted that, in embodiments of this application, division of the modules is an example, and is merely logical function division. During actual implementation, there may be another division manner.

Based on a same concept as that of the foregoing model monitoring method, this application further provides the following model monitoring apparatus.

FIG. 18 is a diagram of a structure of a model monitoring apparatus according to an embodiment of this application. The model monitoring apparatus 1800 includes a transceiver unit 1801 and a processing unit 1802.

When the model monitoring apparatus is configured to implement a function of the terminal device in the foregoing method embodiments, the processing unit 1802 is configured to perform operations of S601 and S602 in the embodiment shown in FIG. 6; the processing unit 1802 is configured to perform operations of S701 and S702 in the embodiment shown in FIG. 7; the transceiver unit 1801 is configured to perform an operation of the terminal device in S803 in the embodiment shown in FIG. 8, and the processing unit 1802 is configured to perform operations of S801 and S802 in the embodiment shown in FIG. 8; the transceiver unit 1801 is configured to perform an operation of the terminal device in S1003 in the embodiment shown in FIG. 10, and the processing unit 1802 is configured to perform operations of S1001 and S1002 in the embodiment shown in FIG. 10; the transceiver unit 1801 is configured to perform an operation of the terminal device in S1104 in the embodiment shown in FIG. 11, and the processing unit 1802 is configured to perform step S1101 to step S1103 in the embodiment shown in FIG. 11; the transceiver unit 1801 is configured to perform an operation of the terminal device in S1204 in the embodiment shown in FIG. 12, and the processing unit 1802 is configured to perform step S1201 to step S1203 in the embodiment shown in FIG. 12; the transceiver unit 1801 is configured to perform an operation of the terminal device in S1305 in the embodiment shown in FIG. 13, and the processing unit 1802 is configured to perform step S1301 to step S1304 in the embodiment shown in FIG. 13; the transceiver unit 1801 is configured to perform an operation of the terminal device in S1505 in the embodiment shown in FIG. 15, and the processing unit 1802 is configured to perform step S1501 to step S1504 in the embodiment shown in FIG. 15; the processing unit 1802 is configured to perform operations of S1601 and S1602 in the embodiment shown in FIG. 16; or the processing unit 1802 is configured to perform operations of S1701 and S1702 in the embodiment shown in FIG. 17.

When the model monitoring apparatus is configured to implement a function of the access network device in the foregoing method embodiments, the transceiver unit 1801 is configured to perform an operation of the access network device in S803 in the embodiment shown in FIG. 8, and the processing unit 1802 is configured to perform operations of S804 and S805 in the embodiment shown in FIG. 8; the transceiver unit 1801 is configured to perform an operation of the access network device in S1003 in the embodiment shown in FIG. 10, and the processing unit 1802 is configured to perform operations of S1004 and S1005 in the embodiment shown in FIG. 10; the transceiver unit 1801 is configured to perform an operation of the access network device in S1104 in the embodiment shown in FIG. 11, and the processing unit 1802 is configured to perform step S1105 in the embodiment shown in FIG. 11; the transceiver unit 1801 is configured to perform an operation of the access network device in S1204 in the embodiment shown in FIG. 12, and the processing unit 1802 is configured to perform step S1205 in the embodiment shown in FIG. 12; the transceiver unit 1801 is configured to perform an operation of the access network device in S1305 in the embodiment shown in FIG. 13; or the transceiver unit 1801 is configured to perform an operation of the access network device in S1505 in the embodiment shown in FIG. 15.

For specific implementations of the transceiver unit 1801 and the processing unit 1802, refer to descriptions in the foregoing method embodiments.

FIG. 19 is a diagram of a structure of another model monitoring apparatus according to an embodiment of this application. The model monitoring apparatus 1900 includes one or more processors 1901 (where an example of one processor is shown in the figure). Optionally, the model monitoring apparatus 1900 may further include a memory 1903 (represented by dashed lines in the figure). The memory 1903 is configured to store instructions executed by the processor 1901, store input data needed by the processor 1901 to run the instructions, or store data generated by running the instructions by the processor 1901. Optionally, the model monitoring apparatus 1900 may further include an interface circuit 1902 (represented by dashed lines in the figure), and the processor 1901 and the interface circuit 1902 are coupled to each other. It may be understood that, the interface circuit 1902 may be a transceiver or an input/output interface. The processor 1901 is configured to implement a function of the processing unit 1802 in the embodiment shown in FIG. 18, and the interface circuit 1902 is configured to implement a function of the transceiver unit 1801 in the embodiment shown in FIG. 18.

When the model monitoring apparatus is a chip used in an access network device, the chip implements a function of the access network device in the foregoing method embodiments. The chip receives information from another module (for example, a radio frequency module or an antenna) in the access network device, and the information is sent by a terminal device to the access network device. Alternatively, the chip sends information to another module (for example, a radio frequency module or an antenna) in the access network device, and the information is sent by the access network device to a terminal device.

When the model monitoring apparatus is a chip used in a terminal device, the chip implements a function of the terminal device in the foregoing method embodiments. The chip receives information from another module (for example, a radio frequency module or an antenna) in the terminal device, and the information is sent by an access network device to the terminal device. Alternatively, the chip sends information to another module (for example, a radio frequency module or an antenna) in the terminal device, and the information is sent by the terminal device to an access network device.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this application, division of the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a model monitoring system, including the foregoing model monitoring apparatus.

An embodiment of this application further provides a circuit. The circuit is coupled to a memory, and the circuit is configured to perform the method shown in the foregoing embodiments. The circuit may include a chip circuit.

When the model monitoring apparatus is a module used in a base station, the module in the base station implements a function of the base station in the foregoing method embodiments. The module in the base station receives information from another module (for example, a radio frequency module or an antenna) in the base station, and the information is sent by a terminal device to the base station. Alternatively, the module in the base station sends information to another module (for example, a radio frequency module or an antenna) in the base station, and the information is sent by the base station to a terminal device. The module in the base station herein may be a baseband chip of the base station, a CU, a DU, or another module, or may be an apparatus in an open radio access network (open radio access network, O-RAN) architecture, for example, an apparatus like an open CU or an open DU.

It should be noted that, one or more of the foregoing units or units may be implemented by software, hardware, or a combination thereof. When any one of the foregoing units or units is implemented by software, the software exists in a manner of computer program instructions, and is stored in a memory. A processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, a discrete hardware component, or all or a part of circuits in the foregoing device that are configured to implement a processing function, and may implement or perform the methods, steps, and logical block diagrams disclosed in this application. The general-purpose processor may be a microprocessor, any conventional processor, or the like. The steps of the methods disclosed with reference to this application may be directly performed and completed by a hardware processor, or may be performed and completed by a combination of hardware and a software module in the processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include the chip and another discrete device. This is not specifically limited in this embodiment of this application.

The memory in this application may alternatively be a circuit or any other apparatus that can implement a storage function, and is configured to store program instructions and/or data. The memory is any other medium that can carry or store expected program code in a form of an instruction or a data structure and that can be accessed by a computer. However, this is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It should be understood that, unless otherwise specified, "/" in descriptions of this application indicates an "or" relationship between associated objects. For example, A/B may indicate A or B, where A and B may be singular or plural. In addition, in the descriptions of this application, unless otherwise specified, "a plurality of" means two or more. "At least one item (piece) of the following" or a similar expression thereof means any combination of these items, including a singular item (piece) or any combination of plural items (pieces). For example, at least one item (piece) of a, b, or c may indicate: a, b, c, a-b, a-c, b-c, or a-b-c, where a, b, and c may be singular or plural. In addition, to clearly describe the technical solutions in embodiments of this application, words such as "first" and "second" are used in embodiments of this application to distinguish between same items or similar items having basically same functions or purposes. A person skilled in the art may understand that the words such as "first" and "second" do not limit a quantity or an execution sequence, and the words such as "first" and "second" do not limit a definite difference. In addition, in embodiments of this application, words such as "example" or "for example" are used for representing giving an example, an illustration, or a description. Any embodiment or design scheme described as an "example" or "for example" in embodiments of this application should not be construed as being more preferred or having more advantages than another embodiment or design scheme. Exactly, use of the words such as "example" or "for example" is intended to present a related concept in a specific manner for ease of understanding.

All or a part of the foregoing embodiments may be implemented by using software, hardware, firmware, or any combination thereof. When a software program is used for implementing the embodiments, all or a part of the embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to the embodiments, in a process of implementing this application that claims protection, a person skilled in the art may understand and implement another variation of the disclosed embodiments by viewing the accompanying drawings, the disclosed content, and the appended claims. In the claims, "comprising" (comprising) does not exclude another component or step, and "a" or "one" does not exclude a plurality of cases. A single processor or another unit may implement several functions enumerated in the claims. Some measures are recorded in dependent claims that are different from each other. However, this does not mean that these measures cannot be combined to produce better effects.

It may be understood that, various numbers in embodiments of this application are merely used for differentiation for ease of description, and are not used for limiting the scope of embodiments of this application. Sequence numbers of the foregoing processes do not mean an execution sequence, and the execution sequence of the processes should be determined based on functions and internal logic of the processes.

In the foregoing embodiments, descriptions of the embodiments have respective focuses. For a part that is not described in detail in an embodiment, refer to related descriptions in other embodiments.

Components in the apparatus in embodiments of this application may be combined, divided, and deleted based on an actual requirement. A person skilled in the art may combine or integrate different embodiments or features of different embodiments described in this specification.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

## Claims

1. A model monitoring method, wherein the method comprises:

   obtaining first information, wherein the first information comprises one or more first indices corresponding to one or more pieces of ground truth information; and
   obtaining the one or more pieces of ground truth information corresponding to the one or more first indices, wherein
   the one or more pieces of ground truth information are used for obtaining a monitoring result of performance of an artificial intelligence AI model, and an output of the AI model is predicted information.

2. A model monitoring method, wherein the method comprises:

   obtaining first information, wherein the first information comprises time domain resource positions of one or more reference signals that are used for measuring ground truth information; and
   determining one or more pieces of ground truth information based on the first information, wherein
   the one or more pieces of ground truth information are used for obtaining a monitoring result of performance of an AI model, an output of the AI model is predicted information, and a time domain resource position of at least one piece of ground truth information in the one or more pieces of ground truth information is different from a time domain resource position of the predicted information.

3. The method according to claim 1 or 2, wherein the method further comprises:
   sending the one or more pieces of ground truth information.

4. The method according to claim 1 or 2, wherein the method further comprises:

   obtaining one or more pieces of predicted information, wherein the one or more pieces of predicted information are the output of the artificial intelligence AI model; and
   sending the one or more pieces of predicted information.

5. The method according to claim 1 or 2, wherein the method further comprises:

   obtaining one or more pieces of predicted information, wherein the one or more pieces of predicted information are the output of the artificial intelligence AI model; and
   obtaining one or more monitoring results of the performance of the AI model based on the one or more pieces of ground truth information and the one or more pieces of predicted information.

6. The method according to claim 4 or 5, wherein the obtaining the one or more pieces of predicted information comprises:

   receiving second information, wherein the second information comprises one or more second indices corresponding to the one or more pieces of predicted information, or the second information comprises a relative time unit value, relative to a time unit corresponding to a reference resource, of each of the one or more pieces of predicted information; and

obtaining the one or more pieces of predicted information based on the second information.

7. The method according to claim 6, wherein the one or more first indices and the one or more second indices are based on the time unit corresponding to the reference resource.

8. The method according to claim 7, wherein the time unit corresponding to the reference resource is any one of the following:

a first time unit in which a resource for reporting a monitoring result report is located;
a second time unit in which downlink control signaling for scheduling model monitoring is located;
a third time unit determined based on the first time unit or the second time unit; or
a predefined/preconfigured fourth time unit.

9. The method according to claim 5, wherein the method further comprises:

sending a monitoring result report, wherein
the monitoring result report comprises the one or more monitoring results;
the monitoring result report comprises at least one monitoring result that is greater than or equal to a first threshold in the one or more monitoring results;
the monitoring result report comprises at least one monitoring result that is less than or equal to a second threshold in the one or more monitoring results;
the monitoring result report comprises an index of predicted information and an index of ground truth information that correspond to an optimal monitoring result in the one or more monitoring results;
the monitoring result report comprises an index of predicted information and an index of ground truth information that correspond to a worst monitoring result in the one or more monitoring results; or
the monitoring result report comprises an absolute value of a first monitoring result in a plurality of monitoring results, and a relative value, relative to the first monitoring result, of a monitoring result other than the first monitoring result in the plurality of monitoring results.

10. The method according to claim 9, wherein the first monitoring result is determined based on an order of the ground truth information used and/or an order of the predicted information used during obtaining of the plurality of monitoring results.

11. The method according to claim 9 or 10, wherein the monitoring result report comprises a part of all monitoring results.

12. The method according to any one of claims 9 to 11, wherein the monitoring result report and information feedback that is used for sending a measurement result of a reference signal are reported in a same information report, or the monitoring result report and the information feedback that is used for sending the measurement result of the reference signal are reported in different information reports.

13. A model monitoring method, wherein the method comprises:

sending first information, wherein the first information comprises one or more first indices corresponding to one or more pieces of ground truth information; and
receiving the one or more pieces of ground truth information corresponding to the one or more first indices, wherein
the one or more pieces of ground truth information are used for obtaining a monitoring result of performance of an artificial intelligence AI model, and an output of the AI model is predicted information.

14. A model monitoring method, wherein the method comprises:

sending first information, wherein the first information comprises time domain resource positions of one or more reference signals that are used for measuring ground truth information; and
receiving one or more pieces of ground truth information based on the first information, wherein
the one or more pieces of ground truth information are used for obtaining a monitoring result of performance of the AI model, an output of the AI model is predicted information, and a time domain resource position of at least one piece of ground truth information in the one or more pieces of ground truth information is different from a time domain resource position of the predicted information.

**15.** The method according to claim 13 or 14, wherein the method further comprises:

obtaining one or more pieces of predicted information; and
obtaining one or more monitoring results of the performance of the AI model based on the one or more pieces of ground truth information and the one or more pieces of predicted information.

**16.** The method according to claim 13 or 14, wherein the method further comprises:
receiving a monitoring result report, wherein the monitoring result report comprises one or more monitoring results, and the one or more monitoring results are obtained based on the one or more pieces of ground truth information and one or more pieces of predicted information.

**17.** The method according to claim 15, wherein the method comprises:

sending second information, wherein the second information comprises one or more second indices corresponding to the one or more pieces of predicted information, or the second information comprises a relative time unit value, relative to a time unit corresponding to a reference resource, of each of the one or more pieces of predicted information; and
receiving the one or more pieces of predicted information.

**18.** The method according to claim 17, wherein the one or more first indices and the one or more second indices are based on the time unit corresponding to the reference resource.

**19.** The method according to claim 18, wherein the time unit corresponding to the reference resource is any one of the following:

a first time unit in which a resource for reporting a monitoring result report is located;
a second time unit in which downlink control signaling for scheduling the model monitoring is located;
a third time unit determined based on the first time unit or the second time unit; or
a predefined/preconfigured fourth time unit.

**20.** The method according to claim 16, wherein

the monitoring result report comprises the one or more monitoring results;
the monitoring result report comprises at least one monitoring result that is greater than or equal to a first threshold in the one or more monitoring results;
the monitoring result report comprises at least one monitoring result that is less than or equal to a second threshold in the one or more monitoring results;
the monitoring result report comprises an index of predicted information and an index of ground truth information that correspond to an optimal monitoring result in the one or more monitoring results;
the monitoring result report comprises an index of predicted information and an index of ground truth information that correspond to a worst monitoring result in the one or more monitoring results; or
the monitoring result report comprises an absolute value of a first monitoring result in a plurality of monitoring results, and a relative value, relative to the first monitoring result, of a monitoring result other than the first monitoring result in the plurality of monitoring results.

**21.** The method according to claim 20, wherein the first monitoring result is determined based on an order of the ground truth information used and/or an order of the predicted information used during obtaining of the plurality of monitoring results.

**22.** The method according to claim 20 or 21, wherein the monitoring result report comprises a part of all monitoring results.

**23.** The method according to any one of claims 20 to 22, wherein the monitoring result report and information feedback that is used for sending a measurement result of a reference signal are reported in a same information report, or the monitoring result report and the information feedback that is used for sending the measurement result of the reference signal are reported in different information reports.

**24.** The method according to any one of claims 1 to 23, wherein the predicted information is predicted channel state information CSI, and the ground truth information is ground truth CSI; or the predicted information is predicted beam information, and the ground truth information is ground truth beam information.

25. A model monitoring apparatus, comprising a module configured to perform the method according to any one of claims 1 to 24.

26. A model monitoring apparatus, comprising a processor coupled to a memory, wherein the processor is configured to implement a corresponding function in the method performed by the apparatus according to any one of claims 1 to 24.

27. A computer-readable storage medium, wherein the computer-readable storage medium stores a computer program or instructions; and when the computer program or the instructions are executed, the method according to any one of claims 1 to 24 is implemented.

28. A computer program product comprising instructions, wherein when the instructions are run on a model monitoring apparatus, the model monitoring apparatus is caused to perform the method according to any one of claims 1 to 24.

FIG. 1

$$y = f\left(\sum_{i=0}^{n} w_i x_i + b\right)$$

Neuron

$w_0 x_0$

$w_1 x_1$

$w_n x_n$

$y$

FIG. 2A

FIG. 2B

FIG. 2C

FIG. 3

(a)                    (b)                    (c)

FIG. 4A

EP 4 733 944 A1

Non-real-time RIC

Access network device

Near-real-time RIC

CU-CP

CU-UP

DU

RU

Terminal device

FIG. 4B

Core network device

AI entity

OAM

NG

NG

Access network device

AI entity

Xn

Access network device

AI entity

AI entity

FIG. 4C

```
                    ┌─────────────────┐
                    │  Core network   │
                    │     device      │                          ┌──────────────────┐
                    │  ┌───────────┐  │                          │                  │
                    │  │ AI entity │──┼──────────────────────────┤                  │
                    │  └───────────┘  │                          │                  │
                    └────────┬────────┘                          │                  │
                      NG    ╱ ╲   NG                             │                  │
                          ╱     ╲                                │                  │
         ┌───────────────┐       ┌───────────────┐               │                  │
         │      CU       │  Xn   │      CU        │              │       OAM        │
         │  ┌──────────┐ │───────│  ┌──────────┐  │──────────────┤                  │
         │  │AI entity │ │       │  │AI entity │  │              │                  │
         │  └──────────┘ │       │  └──────────┘  │              │                  │
         └───────┬───────┘       └───────┬────────┘              │  ┌────────────┐  │
              F1 │                    F1  │                       │  │ AI entity  │  │
         ┌───────┴───────┐       ┌───────┴────────┐              │  └────────────┘  │
         │      DU       │       │      DU        │──────────────┤                  │
         │  ┌──────────┐ │       │  ┌──────────┐  │              │                  │
         │  │AI entity │ │       │  │AI entity │  │              │                  │
         │  └──────────┘ │       │  └──────────┘  │              └──────────────────┘
         └───────────────┘       └────────────────┘
```

**FIG. 4D**

```
┌─────────────────────────────────────────┐
│ A terminal device obtains first          │⟋  S501
│ information (including one or more first  │
│ indices corresponding to one or more     │
│ pieces of ground truth information)      │
└────────────────────┬─────────────────────┘
                     │
                     ▼
┌─────────────────────────────────────────┐
│ The terminal device obtains the one or   │⟋  S502
│ more pieces of ground truth information   │
│ corresponding to the one or more first   │
│ indices                                   │
└──────────────────────────────────────────┘
```

**FIG. 5**

```
┌─────────────────────────────────────────┐
│ A terminal device obtains first          │⟋  S601
│ information (including time domain        │
│ resource positions of one or more        │
│ reference signals that are used for       │
│ measuring ground truth information)      │
└────────────────────┬─────────────────────┘
                     │
                     ▼
┌─────────────────────────────────────────┐
│ The terminal device determines one or    │⟋  S602
│ more pieces of ground truth information  │
│ based on the first information           │
└──────────────────────────────────────────┘
```

**FIG. 6**

| t–5 | t–4 | t–3 | t–2 | t–1 | t | t+1 | t+2 | t+3 | t+4 | t+5 |
|-----|-----|-----|-----|-----|---|-----|-----|-----|-----|-----|
| RS  |     |     |     |     | RS |     |     |     |     | RS  |

FIG. 7

| Terminal device | | Access network device |
|-----------------|---|-----------------------|

S801: The terminal device obtains first information (including one or more first indices corresponding to one or more pieces of ground truth CSI)

S802: The terminal device obtains the one or more pieces of ground truth CSI corresponding to the one or more first indices

S803: One or more pieces of ground truth CSI

S804: The access network device obtains one or more pieces of predicted CSI

S805: The access network device obtains one or more monitoring results of performance of an AI model based on the one or more pieces of ground truth CSI and the one or more pieces of predicted CSI

FIG. 8

Reference resource

t–5 t–4 t–3 t–2 t–1 t t+1 t+2 t+3 t+4 t+5

RS [ ] [ ] [ ] [ ] RS [ ] [ ] [ ] [ ] RS

FIG. 9

| Terminal device | | Access network device |
|---|---|---|

S1001: The terminal device obtains first information (including time domain resource positions of one or more CSI-RSs that are used for measuring ground truth CSI)

S1002: The terminal device determines one or more pieces of ground truth CSI based on the first information

S1003: One or more pieces of ground truth CSI

S1004: The access network device obtains one or more pieces of predicted CSI

S1005: The access network device obtains one or more monitoring results of performance of an AI model based on the one or more pieces of ground truth CSI and the one or more pieces of predicted CSI

FIG. 10

| Terminal device | | Access network device |
|---|---|---|

S1101: The terminal device obtains first information (including one or more first indices corresponding to one or more pieces of ground truth CSI)

S1102: The terminal device obtains the one or more pieces of ground truth CSI corresponding to the one or more first indices

S1103: The terminal device obtains one or more pieces of predicted CSI

S1104: One or more pieces of ground truth CSI and one or more pieces of predicted CSI

S1105: The access network device obtains one or more monitoring results of performance of an AI model based on the one or more pieces of ground truth CSI and the one or more pieces of predicted CSI

FIG. 11

```
┌──────────────┐                              ┌──────────────┐
│   Terminal   │                              │    Access    │
│    device    │                              │ network device │
└──────┬───────┘                              └──────┬───────┘
       │                                             │
┌──────┴──────────────────────────────────┐         │
│ S1201: The terminal device obtains first │         │
│ information (including time domain       │         │
│ resource positions of one or more        │         │
│ CSI-RSs that are used for measuring      │         │
│ ground truth CSI)                        │         │
└──────┬──────────────────────────────────┘         │
┌──────┴──────────────────────────────────┐         │
│ S1202: The terminal device determines    │         │
│ one or more pieces of ground truth CSI   │         │
│ based on the first information           │         │
└──────┬──────────────────────────────────┘         │
┌──────┴──────────────────────────────────┐         │
│ S1203: The terminal device obtains one   │         │
│ or more pieces of predicted CSI          │         │
└──────┬──────────────────────────────────┘         │
       │                                             │
       │  S1204: One or more pieces of ground        │
       │  truth CSI and one or more pieces of        │
       │  predicted CSI                              │
       │ - - - - - - - - - - - - - - - - - - - - - ─>│
       │                                      ┌──────┴───────────────────────────────┐
       │                                      ┆ S1205: The access network device      ┆
       │                                      ┆ obtains one or more monitoring results┆
       │                                      ┆ of performance of an AI model based    ┆
       │                                      ┆ on the one or more pieces of ground    ┆
       │                                      ┆ truth CSI and the one or more pieces    ┆
       │                                      ┆ of predicted CSI                        ┆
       │                                      └──────┬───────────────────────────────┘
       │                                             │
```

FIG. 12

| Terminal device | | Access network device |
|---|---|---|

S1301: The terminal device obtains first information (including one or more first indices corresponding to one or more pieces of ground truth CSI)

S1302: The terminal device obtains the one or more pieces of ground truth CSI corresponding to the one or more first indices

S1303: The terminal device obtains one or more pieces of predicted CSI

S1304: The terminal device obtains one or more monitoring results of performance of an AI model based on the one or more pieces of ground truth CSI and the one or more pieces of predicted CSI

S1305: Monitoring result report

FIG. 13

Reference resource

| t–5 | t–4 | t–3 | t–2 | t–1 | t | t+1 | t+2 | t+3 | t+4 | t+5 | t+6 | t+7 | t+8 | t+9 |
|---|---|---|---|---|---|---|---|---|---|---|---|---|---|---|
| RS | | | | | RS | | | | | RS | | | | |

Report a monitoring result

FIG. 14

Terminal device

Access network device

S1501: The terminal device obtains first information (including time domain resource positions of one or more CSI-RSs that are used for measuring ground truth CSI)

S1502: The terminal device determines one or more pieces of ground truth CSI based on the first information

S1503: The terminal device obtains one or more pieces of predicted CSI

S1504: The terminal device obtains one or more monitoring results of performance of an AI model based on the one or more pieces of ground truth CSI and the one or more pieces of predicted CSI

S1505: Monitoring result report

FIG. 15

A terminal device obtains first information (including one or more first indices corresponding to one or more pieces of ground truth beam information)

S1601

The terminal device obtains the one or more pieces of ground truth beam information corresponding to the one or more first indices

S1602

FIG. 16

A terminal device obtains first information (including time domain resource positions of one or more reference signals that are used for measuring ground truth beam information) — S1701

The terminal device determines one or more pieces of ground truth beam information based on the first information — S1702

FIG. 17

1800

Model monitoring apparatus

Transceiver unit — 1801

Processing unit — 1802

FIG. 18

1900

Model monitoring apparatus

Processor — 1901

Interface circuit — 1902

Memory — 1903

FIG. 19

## INTERNATIONAL SEARCH REPORT

| International application No. |
| --- |
| **PCT/CN2024/104777** |

**A. CLASSIFICATION OF SUBJECT MATTER**

G06F11/34(2006.01)i;  G06F11/30(2006.01)i;  G06N20/00(2019.01)i;  G06N3/02(2006.01)i

According to International Patent Classification (IPC) or to both national classification and IPC

**B. FIELDS SEARCHED**

Minimum documentation searched (classification system followed by classification symbols)

IPC:G06F; G06N

Documentation searched other than minimum documentation to the extent that such documents are included in the fields searched

Electronic data base consulted during the international search (name of data base and, where practicable, search terms used)

CNABS, CNTXT, CNKI, IEEE, EPTXT, WOTXT, USTXT, VEN: 模型, AI, 人工智能, 大数据, 监控, 真实值, 真值, 检测值, 预测, 时间, 时标, 时间戳, 上行, 下行, model, AI, artificial intelligence, big data, monitoring, real value, true value, detect value, prediction, time, time scale, time stamp, upgoing, downgoing

**C. DOCUMENTS CONSIDERED TO BE RELEVANT**

| Category* | Citation of document, with indication, where appropriate, of the relevant passages | Relevant to claim No. |
| --- | --- | --- |
| A | CN 115658419 A (PING AN TECHNOLOGY (SHENZHEN) CO., LTD.) 31 January 2023 (2023-01-31) description, paragraphs 0052-0150, and figures 1-4 | 1-28 |
| A | CN 110378564 A (CHINA PING AN PROPERTY INSURANCE CO., LTD.) 25 October 2019 (2019-10-25) entire document | 1-28 |
| A | CN 114189889 A (CHINA ACADEMY OF INFORMATION AND COMMUNICATIONS TECHNOLOGY) 15 March 2022 (2022-03-15) entire document | 1-28 |
| A | CN 114461502 A (BEIJING BAIDU NETCOM SCIENCE AND TECHNOLOGY CO., LTD.) 10 May 2022 (2022-05-10) entire document | 1-28 |
| A | CN 114861909 A (BEIJING BAIDU NETCOM SCIENCE AND TECHNOLOGY CO., LTD.) 05 August 2022 (2022-08-05) entire document | 1-28 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 September 2024** | **26 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/104777**

### C.    DOCUMENTS CONSIDERED TO BE RELEVANT

| Category* | Citation of document, with indication, where appropriate, of the relevant passages | Relevant to claim No. |
|---|---|---|
| A | US 2020201727 A1 (MICROSOFT TECHNOLOGY LICENSING, LLC) 25 June 2020 (2020-06-25)<br>    entire document | 1-28 |
| A | WO 2022236807 A1 (QUALCOMM INC. et al.) 17 November 2022 (2022-11-17)<br>    entire document | 1-28 |

Form PCT/ISA/210 (second sheet) (July 2022)

**INTERNATIONAL SEARCH REPORT**
Information on patent family members

International application No.

**PCT/CN2024/104777**

| Patent document cited in search report | | | Publication date (day/month/year) | Patent family member(s) | | | Publication date (day/month/year) |
|---|---|---|---|---|---|---|---|
| CN | 115658419 | A | 31 January 2023 | None | | | |
| CN | 110378564 | A | 25 October 2019 | None | | | |
| CN | 114189889 | A | 15 March 2022 | WO | 2023097870 | A1 | 08 June 2023 |
| CN | 114461502 | A | 10 May 2022 | WO | 2023155378 | A1 | 24 August 2023 |
| CN | 114861909 | A | 05 August 2022 | None | | | |
| US | 2020201727 | A1 | 25 June 2020 | US | 11204847 | B2 | 21 December 2021 |
| WO | 2022236807 | A1 | 17 November 2022 | EP | 4338457 | A1 | 20 March 2024 |
| | | | | KR | 20240007130 | A | 16 January 2024 |
| | | | | US | 2024147267 | A1 | 02 May 2024 |
| | | | | BR | 112023023057 | A2 | 30 January 2024 |
| | | | | CN | 117322031 | A | 29 December 2023 |
| | | | | IN | 202347058865 | A | 06 October 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310870686